# EUROPEAN PATENT SPECIFICATION

(11) **EP 1 968 278 B1**
(45) Date of publication and mention of the grant of the patent: **22.02.2012**
(21) Application number: 08010827.7
(22) Date of filing: 07.01.1999
(51) Int. Cl.: H04W 88/02, G06F 1/32, G06F 17/21, G06F 17/22, H04L 29/06, H04L 29/12, H04M 1/725, H04L 12/12

(54) **Low level content filtering**
Systemnahe Inhaltsfilterung
Filtrage de contenu bas niveau

(30) Priority: 07.01.1998 US 70720 P; 13.02.1998 US 75123 P; 30.06.1998 US 107724; 30.06.1998 US 107666; 10.11.1998 US 189591
(43) Date of publication of application: 10.09.2008
(62) Divisional of application: 99901360.0
(73) Proprietor: Microsoft Corporation, Redmond, WA 98052-6399 (US)
(72) Inventor: Kadyk, Don c/o Microsoft Corporation, Redmond, WA 98052 (US); Cronin, Dennis c/o Microsoft Corporation, Redmond, WA 98052 (US); O'Leary, Michael J., Redmond, WA 98053 (US)
(74) Representative: Goddar, Heinz J.

(56) References cited:
- EP-A- 0 653 736
- EP-A2- 0 434 231
- WO-A-97/17682
- US-A- 5 473 607

## Description

### BACKGROUND OF THE INVENTION

The present invention relates to personal mobile computing devices commonly known as handheld portable computers. More particularly, the present invention relates to a device and method for providing low level content filtering of wireless information on a mobile device.

Mobile devices are small electronic computing devices often referred to as personal digital assistants. Many of such mobile devices are handheld devices, or palm-size devices, which comfortably fit within the hand. One commercially available mobile device is sold under the trade name HandHeld PC (or H/PC) having software provided by Microsoft Corporation of Redmond, Washington.

Generally, the mobile device includes a processor, random access memory (RAM), and an input device such as a keyboard and a display, wherein the keyboard can be integrated with the display, such as a touch sensitive display. A communication interface is optionally provided and is commonly used to communicate with a desktop computer. A replaceable or rechargeable battery powers the mobile device. Optionally, the mobile device can receive power from an external power source that overrides or recharges the built-in battery, such as a suitable AC or DC adapter, or a powered docking cradle.

In one common application, the mobile device is used in conjunction with the desktop computer. For example, the user of the mobile device may also have access to, and use, a desktop computer at work or at home. The user typically runs the same types of applications on both the desktop computer and on the mobile device. Thus, it is quite advantageous for the mobile device to be designed to be coupled to the desktop computer to exchange information with, and share information with, the mobile device.

Another technique for providing information to the mobile device includes the use of a low bitrate channel or transport, such as a pager network, to transfer the information wirelessly. For example, such information can include electronic mail or news, weather, sports, traffic and local event information typically obtained from a desktop computer connected to the Internet. In this technique, wireless information is transmitted over "wireless addresses" ("capcodes"). However, wireless addresses are a very limited resource. For example, a typical pager includes 4-16 addresses. The pager monitors broadcast: frequencies at particular intervals for addresses and, if it finds that the broadcast has no address of interest, the pager shuts down until the next monitoring interval. This technique provides significant power savings because the pager wakes up to receive and process only that information that is of interest to it based on the wireless address.

A conventional technique for transmitting wireless information is to transmit a specific type of content on each wireless address. Commonly, a network operator may charge a subscription fee to users who want their wireless device to be programmed with the specific address. Only those devices that have the particular address programmed therein are capable of receiving the particular content. This technique achieves reduced power consumption, as described above, and allows the network operator to maintain subscription control. Nevertheless, each user is limited to receiving a selected number of services based on the number of wireless addresses available on each particular wireless device. If a user wants an additional service after all addresses have been used, an existing wireless address must be reprogrammed.

In some situations, use of the current technique may actually encourage power consumption. For example, a single wireless address under the current technique would be assigned to a stock information service that will transmit information about all stocks. However, if the user is interested only in one or two stocks, special software may be written for and operated on the wireless device to only display the desired stock or stocks. Using the current system, the wireless device would wake up to receive each and every piece of stock information item being transmitted from the stock information service. The wireless device would then execute the special software to determine if the stock information pertains to the desired stock or stocks. Thus, each time stock information is transmitted, the wireless device will consume power. Commonly, if the wireless device is a mobile device, it executes a general-purpose operating system and may have multiple peripheral devices which will incur high power consumption for each wake up period.

There is a continuing need to improve wireless communication with a mobile device. In particular, there is a need to efficiently process information transmitted over a wireless channel to the mobile device in order to conserve battery resources on the mobile device.

EP0434231A discloses a paging accessory for a portable computer that can wake up the computer if an incoming message is received.

EP0653736A discloses a pager transmission system in which the authority to receive a message can be provided and taken away remotely.

### SUMMARY OF THE INVENTION

The invention provides a computer-readable medium according to claim 1, a computer implemented method according to claim 6 and a portable computing device according to claim 14.

Preferred embodiments are set forth in the dependent claims.

### BRIEF DESCRIPTION OF THE DRAWINGS

FIG. 1 is a simplified block diagram illustrating one embodiment of a mobile device in accordance with the present invention.
FIG. 2 is a more detailed block diagram of one embodiment of the mobile device shown in FIG. 1.
FIG. 3 is a simplified pictorial illustration of one embodiment of the mobile device in accordance with the present invention.
FIG. 4 is a simplified pictorial illustration of another embodiment of the mobile device in accordance with the present invention.
FIG. 5 is a simplified schematic illustration of a wireless receiver in accordance with the present invention.
FIG. 6 is a flow chart illustrating a method of operation for the wireless receiver and the mobile device.
FIG. 7 illustrates a detailed flow chart illustrating operation of the wireless receiver and the mobile device.
FIG. 8 illustrates a general structure of a message packet transmitted to the mobile device in accordance with one aspect of the present invention.
FIG. 9 is a block diagram illustrating modules of a mobile device for filtering based on content.
FIG. 10 is a flow chart illustrating a method of obtaining and creating content filter data.
FIG. 11 is a flow chart illustrating a method of filtering a message using content filter data.

### DETAILED DESCRIPTION OF THE PREFERRED EMBODIMENTS

The discussion below provides a brief, general description of a suitable computing environment in which the invention may be implemented. Although not required, the invention will be described, at least in part, in the general context of computer-executable instructions stored, such as modules and drivers, being executed by a portable computing device, the computer executable instructions being stored on a computer readable medium. Generally, modules and drivers include routine programs, objects, components, data structures, etc., that perform particular tasks or implement particular abstract data types. Moreover, those skilled in the art will appreciate that the invention may be practiced with other computer system configurations, including other handheld devices, such as palmtop computers, multiprocessor systems, microprocessor-based or programmable consumer electronics, network PCs, minicomputers, mainframe computers, and the like. The invention may also be practiced in distributed computing environments where tasks are performed by a plurality of processing devices that are linked through a communications network. In a distributed computing environment, program modules may be located in both local and remote memory storage devices.

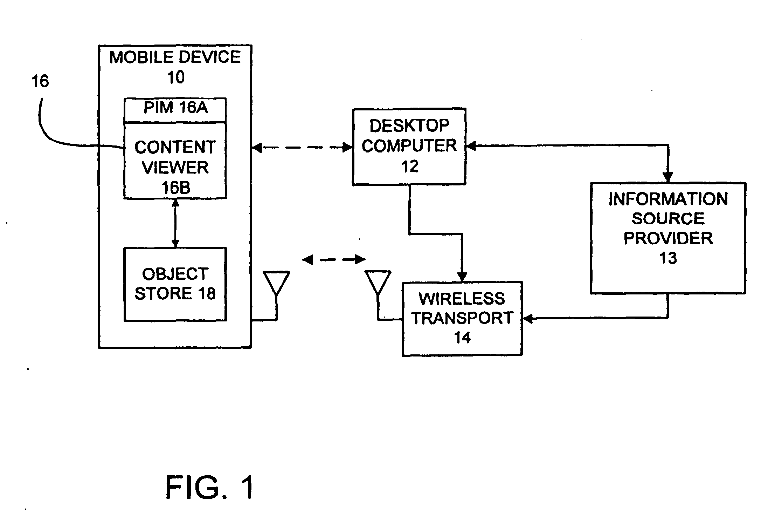

FIG. 1 is a block diagram of an exemplary portable computing device, herein a mobile device 10, in accordance with the present invention. FIG. 1 illustrates that, in one preferred embodiment, the mobile device 10 is suitable for connection with, and to receive information from, a desktop computer 12, a wireless transport 14, or both. The wireless transport 14 can be a paging network, cellular digital packet data (CDPD), FM-sideband, or other suitable wireless communications. However, it should also be noted that the mobile device 10 may not be equipped to be connected to the desktop computer 12, and the present invention applies regardless of whether the mobile device 10 is provided with this capability.

In any case, the mobile device 10 preferably includes one or more application modules 16 and an object store 18. The application modules 16 can be, for example, a personal information manager (PIM) 16A that stores objects related to a user's electronic mail e-mail and scheduling or calendaring information. The application modules 16 can also include a content viewer 16B that is used to view information obtained from a wide-area network (WAN), such as the Internet. In one embodiment, the content viewer 16B is an "offline" viewer in that information is stored primarily before viewing, wherein the user does not interact with the source of information in real time. However, it should be understood that the present invention can be implemented in a real time environment wherein the wireless transport 14 provides two-way communication.

The wireless transport 14 is used to send information to the mobile device 10 for storage in the object store 18 and for use by the application modules 16. The wireless transport 14 receives the information to be sent from an information source provider 13, which, for example, can be a source of news, weather, sports, traffic or local event information. Likewise, the information source provider 13 can receive e-mail and/or scheduling information from the desktop computer 12 to be transmitted to the mobile device 10 through the wireless transport 14. The information from the desktop computer 12 can be supplied to the information source provider 13 through any suitable communication link, such as a direct modem connection. In another embodiment, the desktop computer 12 and the information source provider 13 can be connected together forming a local area network (LAN) or a wide area network (WAN). Such networking environments are commonplace in offices, enterprise-wide computer network Intranets and the Internet. If desired, the desktop computer 12 can also be directly connected to the wireless transport 14.

The object store 18 is preferably configured to store a plurality of individual records or objects, each comprising a plurality of fields or properties related to features of PIM 16A, or to data viewable on the content viewer 16B. For example, where PIM 16A is an e-mail and scheduling program, object store 18 is configured to store objects, each of which has a plurality of properties which can be associated with e-mail, scheduling or calendaring features provided by PIM 16A.

It is also worth noting that, in one embodiment, the mobile device 10 can be coupled to the desktop computer 12 using any suitable, and commercially available, communication link and using a suitable communications protocol. For instance, in one embodiment, the mobile device 10 communicates with the desktop computer 12 with a physical cable which communicates using a serial communications protocol. Other communication mechanisms include infra-red (IR) communication and direct modem communication.

It is also worth noting that the mobile device 10, in one embodiment, can be synchronized with the desktop computer 12. In that instance, properties of objects stored in object store 18 are similar to properties of other instances of the same objects stored in an object store on the desktop computer 12 or on the mobile device 10. Thus, for example, when one instance of an object stored in the object store 18 on the desktop computer 12, the second instance of that object in the object store 18 of the mobile device 10 is updated the next time the mobile device 10 is connected to the desktop computer 12 so that both instances of the same object contain up-to-date data. This is commonly referred to as synchronization.

In order to accomplish synchronization, synchronization components run on both the mobile device 10 and the desktop computer 12. The synchronization components communicate with one another through well defined interfaces to manage communication and synchronization.

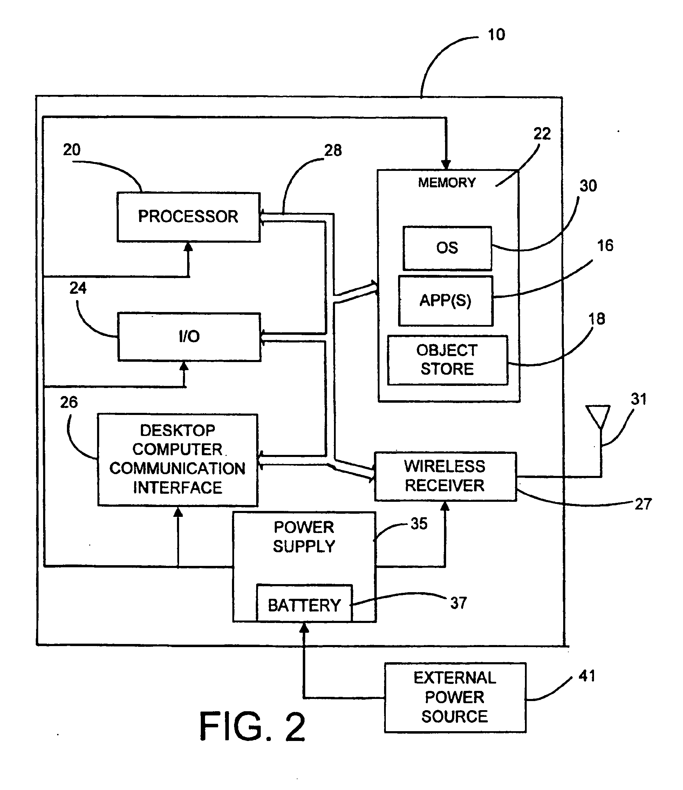

FIG. 2 is a more detailed block diagram of the mobile device 10. The mobile device 10 includes a processor 20, memory 22, input/output (I/O) components 24, a desktop computer communication interface 26 and a wireless receiver 27. In a preferred embodiment, these components of the mobile device 10 are coupled for communication with one another over a suitable bus 28.

Memory 22 is preferably implemented as nonvolatile electronic memory such as random access memory (RAM) with a battery back-up module (not shown) such that information stored in memory 22 is not lost when the general power to the mobile device 10 is shut down. A portion of memory 22 is preferably allocated as addressable memory for program execution, while the remaining portion of memory 22 is preferably used for storage, such as to simulate storage on a disk drive.

Memory 22 includes an operating system 30, the application modules 16 (such as PIM 16A discussed with respect to FIG. 1), as well as the object store 18. During operation, the operating system 30 is preferably loaded into, and executed by, the processor 20 from memory 22. The operating system 30, in one preferred embodiment, is a "WINDOWS CE" brand operating system commercially available from Microsoft Corporation. The operating system 30 is preferably designed for mobile devices, and implements features which can be utilized by PIM 16A and content viewer 16B through a set of exposed application programming interfaces and methods. The objects in object store 18 are preferably maintained by PIM 16A, content viewer 16B and the operating system 30, at least partially in response to calls to the exposed application programming interfaces and methods.

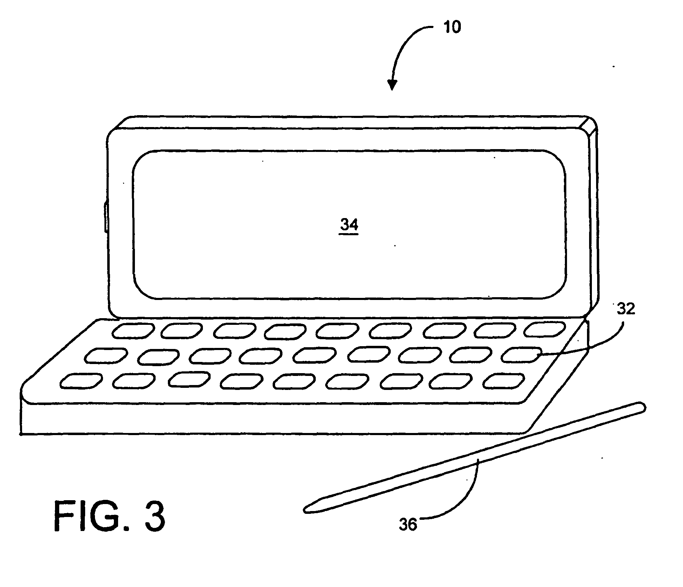

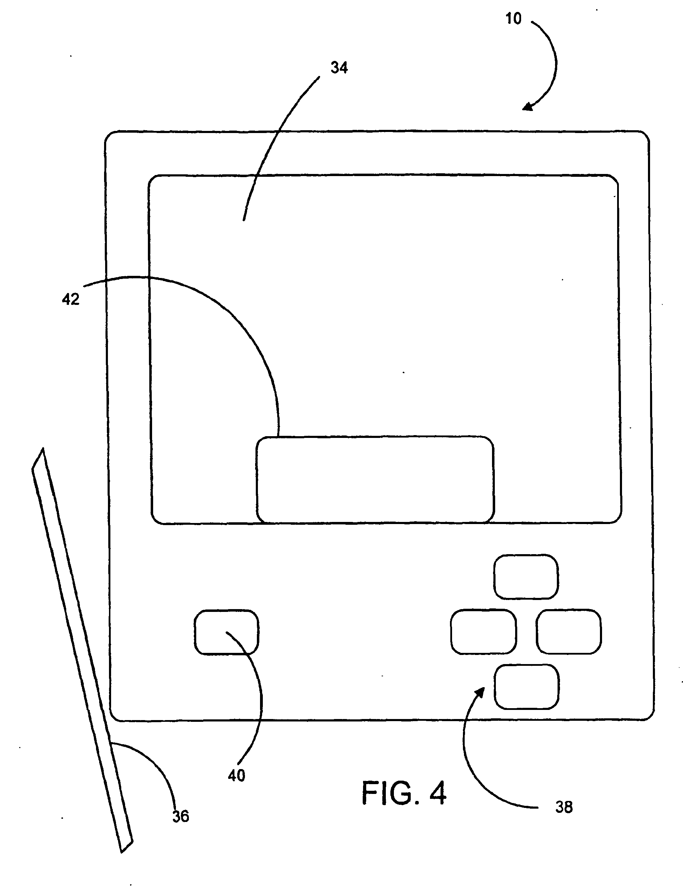

The I/O components 24, in one preferred embodiment, are provided to facilitate input and output operations from the user of the mobile device 10. The I/O components 24 are described in greater detail with respect to FIGS. 3 and 4.

The desktop computer communication interface 26 is optionally provided as any suitable, and commercially available, communication interface. The interface 26 is used to communicate with the desktop computer 12, as described with respect to FIG. 1.

The wireless receiver 27 receives information from the information source provider 13 and includes an antenna 31. The wireless receiver 27 is coupled to the bus 28 for communication with the processor 20 and the object store 18 to store information received from the wireless transport 14 in a manner described below.

A power supply 35 includes a battery 37 for powering the mobile device 10. The power supply 35 communicates with the processor 20 to control power provided to the above-described components. In one embodiment, the power supply 35 provides all power for the mobile device 10, including the wireless receiver 27 without the need for an external battery as typically found in the prior art. Further, components of the mobile device 10, such as the I/O components 24, are provided power only when necessary to process the incoming information.

Optionally, the mobile device 10 can receive power from an external power source 41 that overrides or recharges the built-in battery 37. For instance, the external power source 41 can include a suitable AC or DC adapter, or a power docking cradle for the mobile device 10.

FIG. 3 is a simplified pictorial illustration of one preferred embodiment of the mobile device 10 which can be used in accordance with the present invention. The mobile device 10, as illustrated in FIG. 3, can be a desktop assistant sold under the designation H/PC having software provided by the Microsoft Corporation. In one preferred embodiment, the mobile device 10 includes a miniaturized keyboard 32, a display 34 and a stylus 36. In the embodiment shown in FIG. 3, the display 34 is a liquid crystal display (LCD) which uses a contact sensitive display screen in conjunction with the stylus 36. The stylus 36 is used to press or contact the display 34 at designated coordinates to accomplish certain user input functions. The miniaturized keyboard 32 is preferably implemented as a miniaturized alpha-numeric keyboard, with any suitable and desired function keys which are also provided for accomplishing certain user input functions.

FIG. 4 is another simplified pictorial illustration of the mobile device 10 in accordance with another preferred embodiment of the present invention. The mobile device 10, as illustrated in FIG. 4, includes some items which are similar to those described with respect to FIG. 3, and are similarly numbered. For instance, the mobile device 10, as shown in FIG. 4, also includes the touch sensitive display 34 which can be used, in conjunction with the stylus 36, to accomplish certain user input functions. It should be noted that the display 34 for the mobile devices shown in FIGS. 3 and 4 can be the same size, or of sizes, but will typically be much smaller than a conventional display used with a desktop computer. For example, the displays 34 shown in FIGS. 3 and 4 may be defined by a matrix of only 240x320 coordinates, or 160×160 coordinates, or any other suitable size.

The mobile device 10 shown in FIG. 4 also includes a number of user input keys or buttons (such as scroll buttons 38) which allows the user to scroll through menu options or other display options which are displayed on display 34, without contacting the display 34. In addition, the mobile device 10 shown in FIG. 4 also preferably includes a power button 40 which can be used to turn on and off the general power to the mobile device 10.

It should also be noted that in the embodiment illustrated in FIG. 4, the mobile device 10 includes a handwriting area 42. Handwriting area 42 can be used in conjunction with the stylus 36 such that the user can write messages which are stored in memory 22 for later use by the mobile device 10. In one preferred embodiment, the handwritten messages are simply stored in handwritten form and can be recalled by the user and displayed on the display 34 such that the user can review the handwritten messages entered into the mobile device 10. In another preferred embodiment, the mobile device 10 is provided with a character recognition module such that the user can enter alpha-numeric information into the mobile device 10 by writing that alpha-numeric information on the area 42 with the stylus 36. In that instance, the character recognition module in the mobile device 10 recognizes the alpha-numeric characters and converts the characters into computer recognizable alpha-numeric characters which can be used by the application modules 16 in the mobile device 10.

Although illustrated in FIGS. 3 and 4 as a handheld portable computer, it should be understood that the present invention can be used in other forms of portable computing devices such as pagers, laptops, computers designed for use in automobiles, and portable phones having computers.

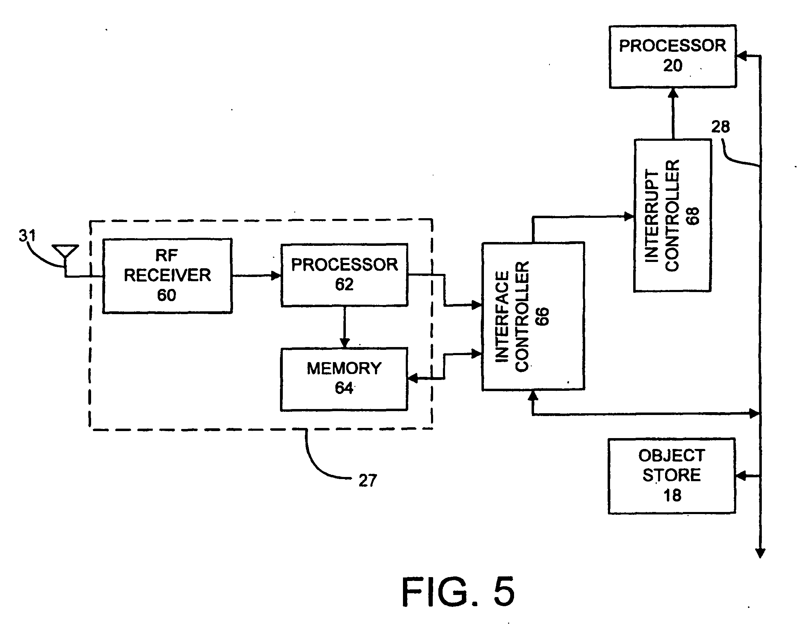

FIG. 5 is a simplified diagram of the wireless receiver 27 as coupled to other components of the mobile device 10. Generally, information sent by the wireless transport 14 is detected by a RF receiver 60 through the antenna 31. The RF receiver 60 provides the wireless information to a processor 62. The processor 62 temporarily stores the information in suitable memory, forming, for example, a FIFO (first-in-first-out) buffer. The processor 62 and memory 64 are operably coupled to an interface controller 66, which is commonly used to connect components to a computer system. In particular, the interface controller 66 couples the wireless receiver 27 to the bus 28 and to an interrupt controller 68 that is operably coupled to the processor 20 of the mobile device 10. The interface controller 66 is designed and operates according to known industry standards such as PCMCIA and Compact Flash Specifications. In one embodiment, the components of the wireless receiver 27 form a removable card that can be selectively coupled to an expansion slot provided in the mobile device 10 wherein suitable connectors are provided to couple the interface controller 66 to the bus 28 and the interrupt controller 68 as well as connect the wireless receiver 27 to the power supply 35 illustrated in FIG. 1. In the embodiment illustrated, the interrupt controller 68 is shown as being separate from the processor 20. In other embodiments, the interrupt controller 68 can be designed as part of the processor 20. The components of the wireless receiver 27 can be manufactured using known fabrication techniques as implemented in pagers, GSM phones, cellular phones or the like. Although illustrated and discussed below with respect to the processor 62, it should be understood that discrete components can also be used in place of the processor 62.

Operation of the wireless receiver 27 and the mobile device 10 is directed to efficiently use power from the power supply 35 in order to maximize the operational time between recharging or replacement of the battery 37. In one embodiment, the wireless receiver 27 is powered and capable of receiving information from the wireless transport 14 at all times irrespective of whether other components of the mobile device 10 are operational and receiving power. This allows the wireless transport 14 to send information to the mobile device 10 even if the user is not interacting with the I/O components 24 of the mobile device 10.

When it is desired that the mobile device 10 receive information at all times, power from the power supply 35 is principally provided to the interrupt controller 68 and the wireless receiver 27, while all other components of the mobile device 10 do not receive power, or receive only enough power to operate in a "suspend" mode or state. For instance, the processor 20 can have three different modes of operation designed to maximize battery life by minimizing power consumption; full speed, standby and suspend. Full speed mode is used to execute applications. Standby mode is used during brief idle periods. Standby mode can use less than one-tenth (1/10th) of full speed power. Suspend mode is used during long idle periods. Suspend mode can use less than one-one thousandth (1/1000th) of full speed power.

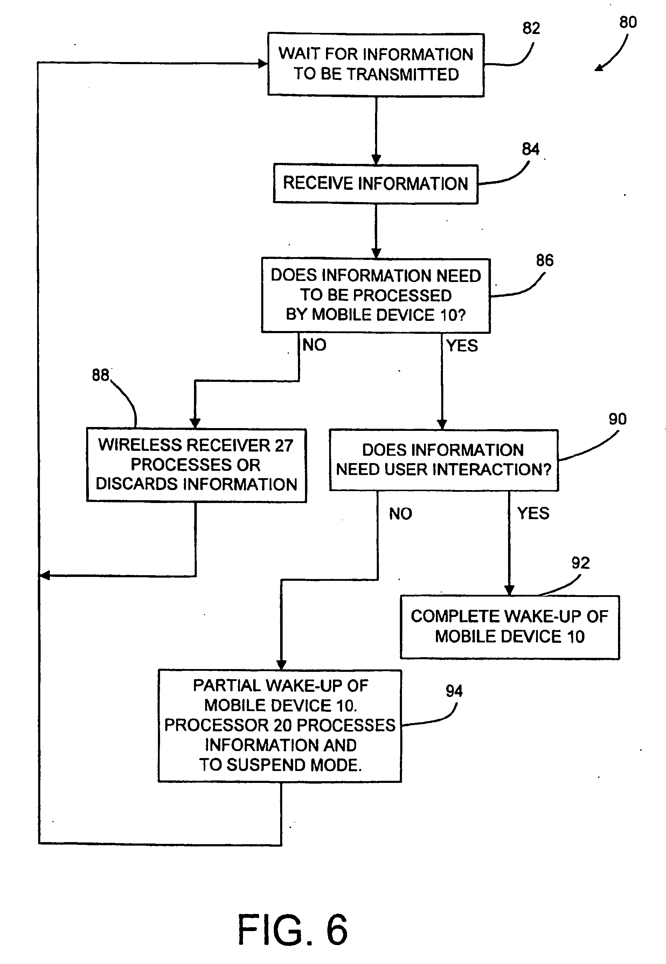

FIG. 6 illustrates a method of operation 80 of the mobile device 10 and the wireless receiver 27 to process information from the wireless receiver 27. The system and method are further described in co-pending application entitled "SYSTEM AND METHOD FOR RECEIVING WIRELESS INFORMATION ON A MOBILE DEVICE", and Serial No. 09/189,024 filed November 10, 1998. At step 82, the wireless receiver 27 and the mobile device 10 await information to be sent from the wireless transport 14. It is assumed that only the wireless receiver 27 and the interrupt controller 68 are receiving power and operating, while all other components are either off or are in a suspend state, as discussed above.

At step 84, information is received by the RF receiver 60 from the wireless transport 14. The information is then processed by the wireless receiver 27 at step 86. In the embodiment illustrated, the processor 62 initially analyzes the information received and determines if the information requires further processing by the processor 20 of the mobile device 10 and/or storage of the information in the object store 18. If at step 86, the processor 62 determines that the processing or storage components of the mobile device 10 are not needed, operational flow continues to step 88 whereat the wireless receiver 27 processes or discards the information received. For instance, upon processing, the processor 62 can determine that the information received does not pertain to the mobile device 10, such as when a wireless address (capcode) does not pertain to the mobile device 10, and thus, the information can be discarded. Alternatively, the processor 62 can determine that all of the information can be temporarily stored in memory 64 for later retrieval by the processor 20 of the mobile device 10. After processing the information at step 88, operational flow returns to step 82 where the wireless receiver 27 awaits further transmitted information.

Steps 86 and 88 illustrate how the wireless receiver 27 can receive and process information without further interaction with other components of the mobile device 10. Thus, power consumption from the power supply 35 is conserved since none of the other components of the mobile device 10 have been turned-on or operated at a higher power consumption rate.

If at step 86, the wireless receiver 27 determines that the information received must be further processed by the mobile device 10, operational flow continues to step 90. At step 90, the processor 20 is awoken by the interrupt controller 68 as initiated by the processor 62. The processor 20 retrieves the information stored in memory 64 and processes the information to determine if user interaction is required. If user interaction is required, operational flow proceeds to step 92 whereat user input devices, such as the keyboard 32, are activated and the user is notified of the information through the display 34.

If at step 90, the processor 20 determines that user interaction is not necessary to process the information, the processor 20 processes the information, turning on only those components of the mobile device 10 that are necessary at step 94. For instance, the information received by the wireless receiver 27 could have exceeded the memory capabilities of memory 64 and that the only required action is to store the information in the object store 18 or other temporary memory provided in the mobile device 10. In such a case, it is not necessary to activate or turn on the keyboard 32 or the display 34. The processor 20 merely performs the required actions such as storing the information in memory in the mobile device 10 and returns to the suspend mode. Operational flow then returns to step 82 whereat the wireless receiver awaits further transmitted information.

Steps 90 and 94 thus illustrate how power consumption is conserved since only a partial wake-up of the mobile device 10 has been performed to process the information. In other words, since only those components necessary to process the information have been turned-on, while other components such as the display 34 remain off, power has been conserved and battery life has been extended.

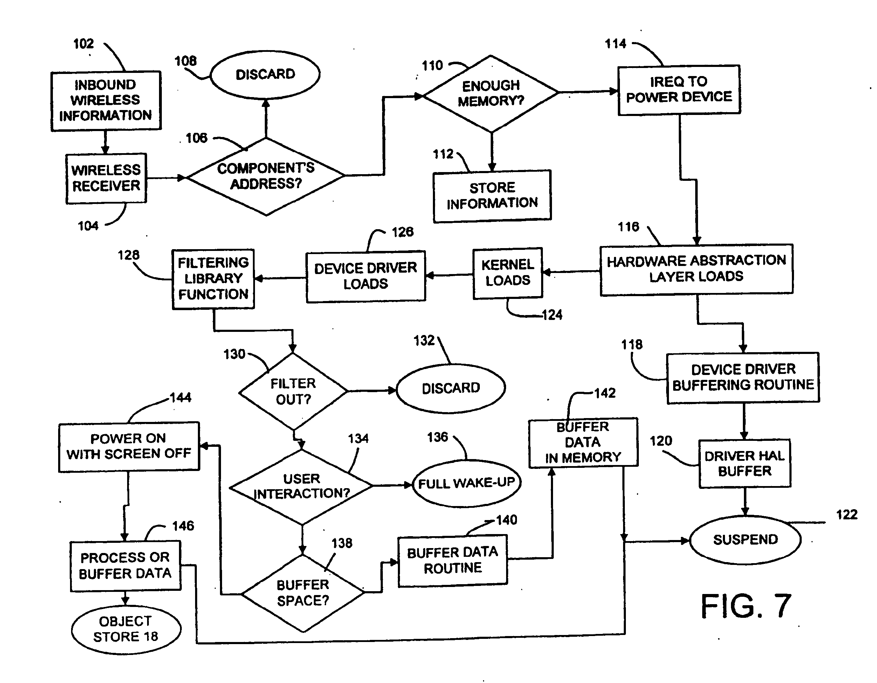

FIG. 7 illustrates a detailed method of operation of the wireless receiver 27 and the mobile device 10. Generally, the wireless receiver 27 and the mobile device 10 process three types of incoming messages. A first type of message is not related to the mobile device 10 and is discarded. A second type of message is for the mobile device 10, but either can be received now for further processing at a later time, or can be received and processed at a later time. A third type of message is a high priority message that must be processed immediately and may require user interaction. All of these messages are efficiently handled by the method of FIG. 7 to conserve power and maximize battery life.

In FIG. 7, wireless data 102 is received by the wireless receiver 27 as indicated at step 104. At step 106, the wireless information is examined by the processor 62 to ascertain if the wireless address of the information pertains to the mobile device 10. Typically, the wireless receiver 27 will be configured to respond to multiple wireless addresses, wherein each wireless address is used by one or a number of services to send information to the mobile device 10. For instance, one wireless address can be used to send high priority or personal messages to the mobile device 10, while other wireless addresses are used by one or more services to send other information to the mobile device 10. At step 106, the processor 62 ascertains if the wireless information pertains to a valid wireless address of the mobile device 10. If the wireless information does not pertain to the mobile device 10, it is discarded at step 108.

At step 110, valid information for the mobile device 10 is stored in memory 64 of the wireless receiver 27. At this step, the processor 62 ascertains whether all of the information can be stored in memory 64, or if the mobile device 10 must be at least partially woke up. If the entire incoming information can be stored in memory 64, and the information is not high priority, the processor 62 stores the incoming information at step 112. If, on the other hand, the processor 62 determines that the incoming information cannot be completely stored in memory 64, or that the incoming information pertains to a high priority message, for example, based on its wireless address, an interrupt request is generated at step 114 to wake up the processor 20 of the mobile device 10.

At this point, it should be noted that the size of memory 64 is proportional to the rate at which wireless information is received by the wireless receiver 27 and the amount of time necessary for the processor 20 of the mobile device 10 to wake up and begin extracting information from memory 64. In one embodiment, the minimum amount of memory is provided in the wireless receiver 27 to store information until the processor 20 wakes up. In this manner., the size of memory 64 present in the wireless receiver 27 is less, thereby reducing the overall size of the wireless receiver 27 and reducing its cost.

At step 116, the processor 20 of the mobile device 10 executes an initial body of code herein called the hardware abstraction layer (HAL). As part of the HAL wake-up code, HAL can call a function herein identified as CheckAndProcessRadioWakeup(). Generally, this function checks if the radio receiver 27 needs some service and whether this service can be handled within HAL or if more components of the device will need to be started. The return values include: (1) a first value indicating that the radio receiver 27 has been serviced and there is no need to start other components (herein the first value is "HRADIO_NOCONTINUE"); (2) a second value indicating that the display 34 should be turned on (herein the second value is "HRADIO_CONTINUE_VIDEO_ON"); and (3) a third value indicating that the display 34 should not be turned on (herein the third value is "HRADIO_CONTINUE_VIDEO_OFF"). It should be noted that the return values can be ignored if other wake-up events occur. For instance, if the user presses the power button 40 about the same time as a radio interrupt is also received, and if the return value is "HRADIO_NOCONTINUE" or "HRADIO_CONTINUE_VIDEO_OFF" the return value is ignored. In one embodiment, the radio receiver 27 registers information in a data block accessible by the HAL program indicative of the return values. The function is further described in detail in the Appendix along with other functions and related information.

Based on the return values, the processor 20 retrieves the information stored in memory 64 and examines it to determine if the processor can store the information temporarily in a temporary buffer herein called a HAL buffer 120. If temporary storage in the HAL buffer 120 is possible, program flow continues to step 118 whereat the processor 20 executes a device driver buffering routine which stores the information in the HAL buffer 120 as indicated at step 120. The processor 20 then returns to the suspend state as indicated at step 122.

If, on the other hand, at step 116, the processor 20 determines that the information cannot be stored in the HAL buffer 120, for instance, where the information is high priority or of length exceeding the storage available in the HAL buffer 120, the processor 20 continues its wake-up process and a kernel is loaded at step 124. Each of the device drivers, such as a display driver, a serial port driver, etc., is then loaded at step 126. One particular driver that is loaded is a device driver, which executes a filtering library function, and indicated at step 128, and is described in more detail below. The device driver examines the information at step 130 to determine if the information is relevant to the mobile device 10. In contrast to step 106 where information is discarded if it does not correspond to a wireless address recognized by the mobile device 10, information is discarded at step 130 if, based on its content, it is not relevant to the mobile device 10. For instance, the user may want to receive only football scores and no other sports scores. However, all of the sports scores may be transmitted with respect to a particular wireless address, thus information on baseball scores would not be discarded at step 106 since this information was transmitted with respect to the correct wireless address for football scores. However, at step 130, the content of the information is examined so baseball scores would be discarded, while football scores are retained. Steps 116 to 128 are very efficient and quick. In particular, the filtering step 128 examines the initial few bytes of the information and can quickly determine if the information should be kept or discarded. The number and location of the bytes to examine are predetermined and agreed upon between the wireless information carrier and software developers. By examining only the first few bytes, the filtering step 128 can execute quickly (the processor 20 is up for less time) and does not require all of the operating system services to be started. Non-relevant information is discarded at step 132. It should be noted that upon loading of the pager driver at step 128, any information stored in the HAL buffer 120 at step 120 from prior messages is retrieved and processed.

It should be noted that in a further embodiment, the filtering step 128 can include other filtering parameters settable by applications executable on the mobile device 10, as described below. In other words, besides filtering on designated bytes within the message, as discussed above, the filtering library function can include other filtering parameters determined by application programs. For instance, a news viewer application can set a filter parameter where the mobile device 10 always rejects and does not store digital pictures and accepts only the accompanying text. The filter parameters can be passed from the application to the filtering library at filtering step 128 using, for example, application program interfaces (APIs).

If the information is relevant to the mobile device 10 and should not be discarded, program flow continues to step 134 to determine if user interaction is needed. For instance, if the message pertains to a high priority message requiring acknowledgement by the user, the mobile device 10 completely wakes up with activation of the display 34 to indicate that a message of high priority has been received. A full wake-up is indicated at step 136.

If the information does not require user interaction, program flow continues to step 138. At step 138, if buffer space exists and no further processing is necessary, the processor 20 executes a buffer data routine at step 140 to store the information at step 142. The processor 20 then returns to the suspend state at step 122. If buffer space does not exist at step 138, the mobile device 10 is powered-up without the display 34 at step 144. The information is then processed or additional buffer space is obtained at step 146. If necessary, access and storage can be made in the object store 18. The processor 20 then returns to the suspend state at step 122. It should be noted that considerable power has been conserved since the user input/output (I/O) devices (display 34 and keyboard 32) have not been powered. However, if the user were to activate the mobile device 10 to turn it on, the display 34 would immediately enable.

The mobile device 10 processes incoming wireless messages according to the above-described method in the background whether or not the user is actively interacting with the mobile device 10 using the I/O components 24. It should be noted that if the user were to turn off the mobile device 10, the wireless receiver 27 will remain powered to receive incoming messages. If the user were to turn off the power during processing of an incoming message, the display 34 would turn off to indicate at least partial shut down of the mobile device 10; however, the incoming message would be processed according to the above-described procedure.

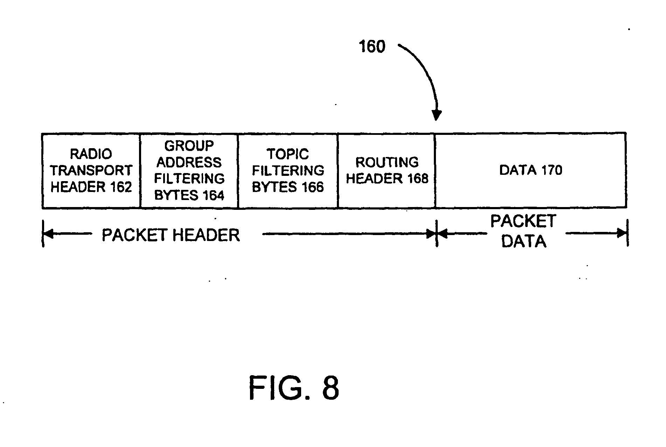

FIG. 8 illustrates one embodiment of an information packet 160 of web content data received by wireless receiver 27. Wireless receiver 27 can receive messages of substantially any format. Many different types of header formats can be defined for receipt by the wireless receiver 27. FIG. 8 gives but one illustrative type of packet format.

Information packet 160 preferably includes a plurality of portions, such as radio transport header 162, group address bytes 164, topic filtering bytes 166, routing header 168 and data 170. The radio transport header 162 includes wireless address (capcode) information. As discussed above, the wireless address information is an identifier used to send a radio message to RF receiver 60 (or any other similar type of radio card) illustrated in FIG. 5. The radio transport header 162, in one embodiment, supports sixteen different addresses. RF receiver 60 filters and discards any radio messages which do not match any of the wireless addresses. If a match is observed, then RF receiver 60 has detected a radio message potentially addressed to it, and must receive and further process the message.

Group address bytes 164 and topic filtering bytes 166 are also provided. A group address, as referred to herein, is a subclass of a wireless address that is used in accordance with the present invention to extend the filtering capability of an address. Further, a topic is a subclass of a wireless address or group address, which is also provided to extend the filtering capability of the wireless address and group address information.

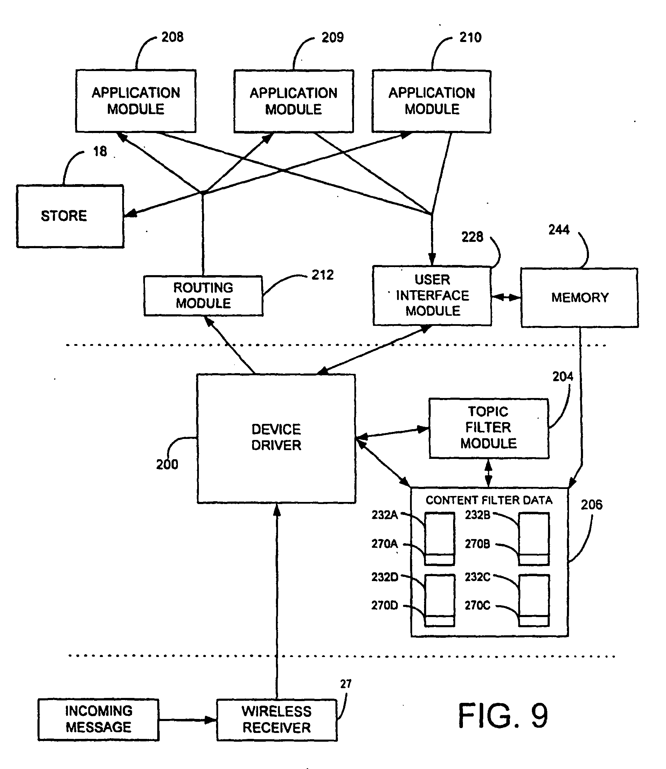

It should be noted that information packet 160 arriving at wireless receiver 27 with an appropriate address may not have group address bytes 164 and topic filtering bytes 166 pre-appended thereto. If those bytes are present, however, a driver 200 (FIG. 9) operates to filter the information packet 160 based on the group and topic filtering bytes.

The driver 200 implements logic which first examines information packet 160 to determine whether any group and topic filtering bytes are included in information packet 160. In one embodiment, the driver 200 supports a library which includes a function AnalyzeMessage(). The AnalyzeMessage function isolates service group codes and other information in the incoming message. If group and topic filtering bytes are present, then the group and topic filtering functions must be performed.

In one embodiment, mobile device 10 includes a memory which contains a group table. Briefly, the group table contains entries of service groups, each of which can be associated with any suitable address. Also, there can preferably be any suitable number of service groups associated with one address. Thus, in one embodiment, group entries in the group table are sorted by address numbers, then by service group codes.

If group or topic filtering bytes are detected, then the driver 200 searches the group table to determine whether the service group code detected in information packet 160 is listed in the group table, and whether it is active or inactive. If the service group code is not found in the table, or if it is found but it has been deactivated (or disabled), then the driver 200 discards the information packet 160 and no further processing is done with respect to that message. However, if driver 200 determines that the group address bytes 164 are included in the group table, then it is determined that the message was intended for that particular mobile device 10 and further processing continues on topic filtering bytes 166, if present. Topic filtering is discussed in greater detail below.

Since all of the group and topic filtering is done at the level of driver 200, it occurs quite low in the protocol stack, or system architecture, of mobile device 10. Thus, filtering occurs early on in the process and the storage space required for the address and message is quite low. In addition, since the driver 200, itself, performs much of this filtering, the group and topic filtering bytes allow any application running on mobile device 10 to pass correct filtering information down to the group and topic tables for filtering at the level of driver 200. This significantly improves power consumption over previous designs because the messages do not need to be received, processed, and passed all the way up to the application level in the protocol stack, or architecture, of mobile device 10 before being filtered.

FIG. 9 illustrates hardware and software modules for filtering input messages based on topic filter bytes 166 prior to storage or delivery to a higher level application module. Generally, in the exemplary embodiment, the modules include the driver 200 that receives messages of the exemplary format described above from the wireless receiver 27. If the input message includes topic filter bytes 166, driver 200 executes a topic filter module 204 that compares the topic filter bytes 166 with previously stored content filter data 206. If the topic filter bytes 166 correspond to user preferences as indicated by the content filter data 206, driver 200 passes the information upwardly in the mobile device architecture for storage in store 18 and/or use by higher level application modules indicated at 208, 209 and 210. In the embodiment illustrated, a routing module 212 is provided to receive at least the data 170 from driver 200. Routing module 212 forwards the input message to store 18 or any of the application modules 208-210 as required or given by routing header 168 (FIG. 8). Communication between driver 200 and routing module 212 can be implemented using standard APIs.

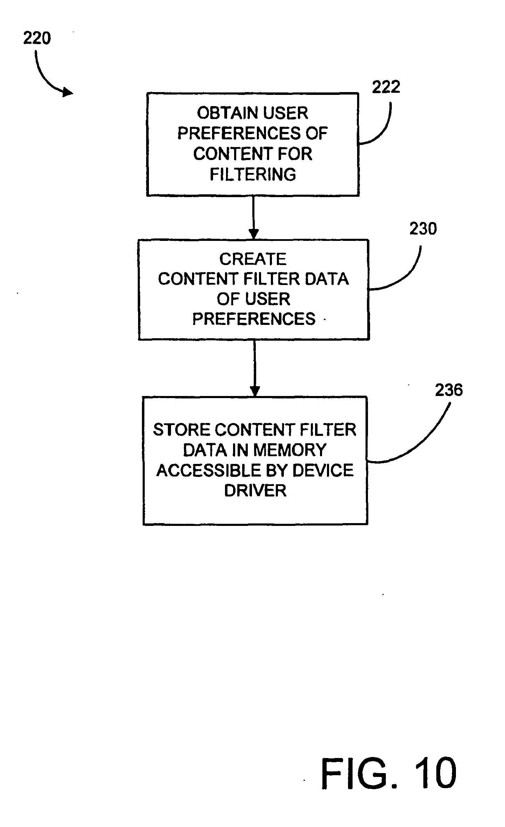

FIG. 10 illustrates a method 220 for obtaining and creating content filter data 206 used to filter input messages or information packets 160. At step 222, user preferences are obtained for the content that will be filtered. Generally, the user provides individual indicators, a range of indicators or a set of indicators that the user would or would not like to receive information on. For example, the indicators can comprise key words, characters, numbers, etc., that have typically been previously agreed to with the information source provider 13 to be used for filtering content. If desired, a hashing function can be used for all packets received, or can be selected based on the type of content information which will be received. For instance, a first hashing function can be used for ASCII strings while other hashing functions can be used for numeric data, non-ASCIIU unicode data, binary data, etc. In another application, indicators in the topic filter bytes 166 can be zip code data allowing region-specific filtering to be received. In yet another application, the topic filter bytes can be mnemonic codes for "channels" of broadcast information, allowing the user to subscribe or unsubscribe to specific channels. Referring back to FIG. 9, a user interface module 228 obtains the indicators from the user. The user interface module 228 can be accessed by or incorporated into application modules 208-210.

Having obtained the user preferences for content filtering at step 222, content filter data 206 is created at step 230. In one embodiment, content filter data 206 is organized as a function of wireless addresses or group addresses in order that content filtering can be performed as a function of the wireless address or group address of the incoming message. In the embodiment illustrated, a plurality of filter data tables 232A, 232B, 232C and 232D are shown, wherein each filter data table 232A-232D is associated with a wireless address or a group address. In one embodiment, the filter data tables 232A-232D can simply contain the indicators provided by the user. However, in order to conserve memory resources, it may be advantageous to transform the indicators into another, smaller representation. For example, a translation function can be implemented wherein a unique integer (within a small range) is obtained for each indicator. The unique integer can then be stored in the corresponding filter data tables 232A-232D. In a further embodiment, each of the filter data tables 232A-232D can comprise a bit-array where the unique integer is used as an offset into the array and wherein each bit, if set ("1"), indicates that the corresponding content is desired, and wherein if the bit is reset ("0"), the corresponding content is not desired. In yet a further embodiment, a hashing function can be used if the range of unique integer numbers becomes too large. However, since the integers will no longer be unique, undesired content information may be obtained if the topic filter bytes 166 in the incoming message correspond to an integer of desired content information.

At step 236, content filter data 206 is stored in memory accessible to driver 200. In one embodiment, content filter data 206, or a smaller portion such as one or more filter data tables 232A-232D is created in memory 244 accessible by user interface module 228, and then transferred to memory accessible to driver 200 in its entirety, for example, through driver 200. Alternatively, driver 200 can allocate necessary memory wherein content filter data 206 or portions thereof, such as filter data tables 232A-232D, are incrementally updated or populated according to the user preferences.

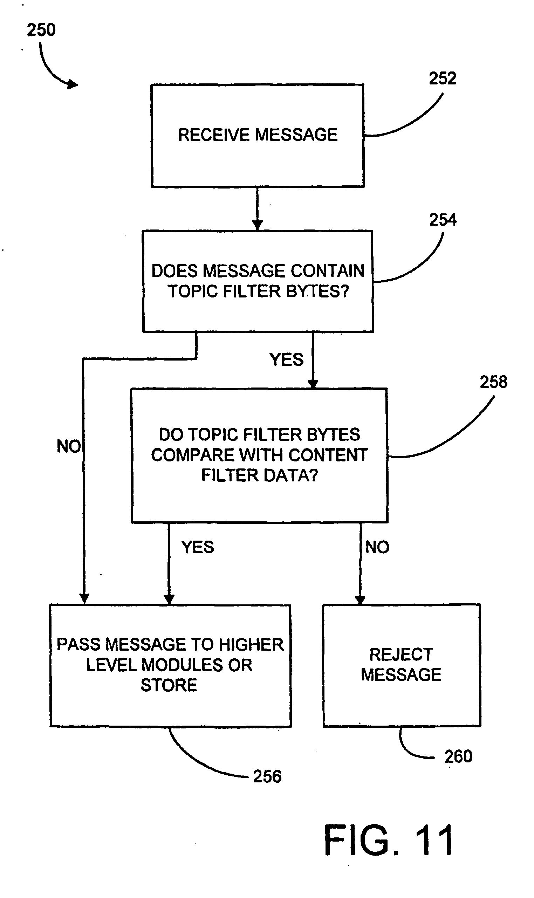

FIG. 11 illustrates a method 250 for processing an incoming message that has been transmitted on a wireless address or group address recognized by mobile device 10. At step 252, driver 200 receives the incoming message. At step 254, driver 200 analyzes the message using the AnalyzeMessage()function described above to ascertain if the incoming message includes topic filter bytes 166 for content filtering. If the message does not contain topic filter bytes 166, operational flow proceeds to step 256 whereat the driver 200 passes the incoming message to store 18, higher application modules 208-210 or, in the embodiment illustrated, to routing module 212.

If, however, the incoming message includes topic filter bytes as detected at step 254, operational flow continues to step 258 whereat driver 200 provides the topic filter bytes 166 to topic filter module 204. Topic filter module 204 compares the topic filter bytes 166 with content filter data 206. In the embodiment illustrated, topic filter module 204 accesses the filter data table 232A-232D that corresponds to the wireless address or group address upon which the incoming message was transmitted. If filter data tables 232A-232D have been created using a hashing function, topic filter module 204 operates the hashing function upon the topic filter bytes 166 so as to ascertain if the incoming message pertains to desired content. It should be noted that the topic filter bytes 166 can be in a compressed and/or in a protocol format such as UNICODE in order to transmit the data packet 160 over a wireless network. In such cases, topic filter module 204 operates upon the topic filter bytes 166 as necessary in order to make a comparison with content filter data 206. It should also be noted that the same hashing function need not be used for each filter data table 232A-232D. Rather, different hashing functions can be used for one or more of filter data tables 232A-232D. Topic filter module 204 can maintain a table of hashing functions according to wireless addresses or group addresses and access this table based on the wireless address or group address that the message was transmitted on.

Topic filter module 204 provides as an output an indication of whether or not the incoming message relates to the user's preferences. If the incoming message pertains to desired content information as compared to content filter data 206, operational flow continues to step 256 whereat driver 200 forwards at least the data portion of the message further in the architecture of the mobile device 10 as discussed above. Otherwise, operational flow proceeds to step 260 whereat the message is discarded by driver 200. Although illustrated wherein functions of driver 200 and topic filter module 204 have been separated, it should be understood that these functions can be performed by driver 200 alone, or divided up among even more than the two modules illustrated in the exemplary embodiment.

In one embodiment, APIs are provided to allow application modules 208-210 to operate with driver 200 in order to select operational parameters and/or access content filter data 206. Exemplary APIs include:

### IsGroupTagRegistered (LPWSTR sxGroupTag, BOOL *fResult, LPDWORD pdwDevice)

This API allows an application module to query driver 200 to ascertain if content filtering will be performed on an address or a group address. As discussed above, driver 200 can maintain a table or other list indicating enablement or disenablement of content filtering as a function of address or group address irrespective of the existence of a filter data table corresponding to the address or group address. This allows easy enabling or disenabling of content filtering as a function of an address or group address. This API returns a "true" or a "false" indication in "fResult" as to whether the group address as given by "szGroupTag" is registered or not.

### CreateFilterTable (HANDLE *phFTable, DWORD dwNumEntries, WIS_FILTER_TABLE wftFilterType)

This API allows an application module to create a filter data table wherein the approximate size or entries of the table is provided at "dwNumEntries". Driver 200 or user interface module 228 allocates necessary space in memory for content filter data 206, or memory 244, respectively, and provides back to the application module a handle or a pointer at "phFTable". It should be noted that the filter data table can be create first in memory 244 and then transferred to memory accessible by driver 200.

In the embodiment illustrated, this API also can include an input denoted herein as "wftFilterType", which can be used to select predefined filter functions. For instance, a first value can be provided to indicate that all messages transmitted on the wireless address or group address will be accepted. A second value can be provided to indicate that all messages will be rejected. A third value can be provided to indicate that a preselected filtering function, such as hashing function will be used. (Other filtering functions can include an individual, set or range of content information.) A fourth value can be provided to indicate that a particular type of data needs to be received first before content filtering will begin. The latter is probably best illustrated by an example. In co-pending application entitled "CHANNEL DEFINITION ARCHITECTURE EXTENSION", a system and method are described wherein Web or Internet is rendered on a mobile device using a channel definition format (CDF) file, a set of script files and a set of data files. Briefly, navigation of the content on the mobile device is performed using the CDF file which includes references to the script files and the data files. When one particular page of content is to be displayed, a script file is accessed and is used to operate upon the data file in order to render the desired information. This architecture allows wireless updates of data files, because, typically, only the data files will change with time. However, if desired, the CDF files and the script files can be also be updated wirelessly. Each of the data files, script files and CDF files have associated identifiers.

In such a system, content filtering can be provided as a function of particular data to be displayed. For instance, the user may only want information regarding football or baseball articles (which are associated with certain identifiers), but not want any articles related to hockey (which are associated with another identifier). Using topic filter bytes 166 as described above, the user can filter the data files accordingly using the identifiers. However, in this system, as discussed above, in order to display the data files, it is necessary that the user receive the CDF file so that upon rendering, the application module will know which script file to use to render the data. The fourth value can be used to indicate that the CDF file must be received before any content filtering will be performed. Upon receipt of the CDF file, this API can then be used to initiate content filtering by providing, for example, the third value.

### SetHashValue (HANDLE hFTable, LPWSTR szValue)

This API is used in accordance with a filter data table comprising a bit-array that is set according to a hashing function. In particular, the hashing function is applied to the input given by "szValue" wherein the filter data table indicated by a handle or a pointer "hFTable" is updated to reflect the desired content.

### SetPreference (HANDLE hFTable, DWORD dwPreferences)

This API allows additional information to be stored for each of the filter data tables 232A-232D. Referring back to FIG. 9, the additional information is indicated at 270A, 270B, 270C and 270D, respectively, for each of the filter data tables 232A-232D. In one embodiment, the additional information 270A-270D can store global preferences that will be applied to the incoming message if transmitted pursuant to the wireless address or group address. For example, data filter table 232A can correspond to football and baseball articles provided on a selected "channel". If desired, an application module can also store a value in portion 270A indicating that only text information will be provided from driver 200 whereas, for example, data pertaining to images will be discarded. In the embodiment illustrated, topic filter module 204 accesses additional information 270A-270D when the corresponding filter data tables 232A-232D are accessed. This information is provided to the driver 200 where the message is further filtered by additional information 270A-270D. In an alternative embodiment, all filtering functions can be performed by topic filter module 204 whereby driver 200 receives only that portion of the message that will be forwarded to higher level modules of the mobile device 10.

### RegisterFilterTable (HANDLE hFTable, LPWSTR szGroupTag, LPDWORD pdwDevice)

This API associates a data filter table with a selected address or group address. As discussed above, in one embodiment, the filter data table can be created in higher level memory 244 associated with application modules 208-210. This API will copy the created data filter table (and associated additional information, if present) into memory accessible by driver 200. It should be noted that this API also allows an application program to disassociate a data filter table from a wireless address or a group address. In the embodiment illustrated, a "null" value for "hFTable" will cause driver 200 to disassociate the filter data table in memory accessible by it for the address or the group address given by "szGroupTable".

### DestroyFilterTable (HANDLE hFTable)

This API releases the high level memory 244 accessible by the application program module to create the filter data table. It should be noted that this API does not disassociate the data filter table from the address or group' address at the level of driver 200.

Although the present invention has been described with reference to preferred embodiments, workers skilled in the art will recognize that changes may be made in form and detail without departing from the scope of the invention, which is defined by the claims.

### APPENDIX

### 1.1.1 Overview

Wireless Services for Windows CE defines a hardware, device drivers, and overall architecture for the incorporation of message-based radio into a Windows CE device. The goal is to create a framework within which applications, system services and hardware all remain modular with respect to each other, thus providing the environment for a wide range of applications.

This appendix addresses what support the device drivers need to provide to meet the following requirements:
1. Power saving achieved by not waking up the whole system.
2. Doing background processing without turning on video

### 1.1.2 Terminology

| | |
|---|---|
| Device | Windows CE hardware (e.g. Palm PC, Auto PC) |
| Radio | Radio HW for a device (e.g. a paging card) |
| OEM | Original Equipment Manufacturer - In this document this term refers to the device manufacturers |
| IHV | Independent HW Vendor- In this document IHV refers to the radio manufacturer (who develops the HW and/or device driver) |
| HAL | Hardware Abstraction Layer. This is implemented by each OEM to abstract their HW implementations from the Windows CE operating system. |
| LCD and VIDEO | These two terms have been used interchangeably and refer to the display panel on the device. |

### 1.1.3 Overview

A typical radio device *listens* to the radio transmissions and determines if there is a message for the user. This determination is based on one or more 'addresses' that are programmed in the radio receiver or hardware (HW). The radio HW is powered independently (i.e., it is powered even when the Windows CE device is powered down) and the radio HW carries out the lowest level of filtering without requiring the Windows CE device to be powered on. This achieves some level of power savings since radio HW typically require only a fraction of power compared to the Windows CE device.

Wireless information Services for Windows CE provides for additional levels of filtering that may or may not be carried out in the radio HW. If the radio HW is separately powered and has enough logic to do additional filtering independent of the device CPU, then it will not cause major power drain from the device power supply. However, it is expected that the majority of the radio HW will be in the Compact Flash card type II form factor (a form factor for most devices) and will not have separate power or CPU due to size constraints. These cards, therefore, will cause a wakeup of the device so that some processing is carried out in the device driver.

Another way to achieve power saving is not to wakeup the system for each message but to buffer them for group processing at a later time. The radio HW may not have enough memory and to use the Windows CE device memory for this purpose will ordinarily require the device to be woken up to run the device driver code that copies message from the radio HW to the system memory. In this case we want the system to be up for a very short duration and there is no need for the display and other subsystems to be powered on.
Thus, the power saving goals can be summarized as:
- System comes up quickly and stays powered on for as little time as possible
- The LCD is not turned on until it is needed
- System shuts down as soon as possible (currently, once the system is up, it does a time out of the order of 1-5 minutes to shutdown)

To achieve the above goals, Win CE Radio device drivers support a state called Partial Wakeup state. This refers to the device state just after wakeup where HAL has initialized but the kernel and file system are not fully initialized. The objective is to do some processing in this state to filter out unwanted messages and shut down the system as soon as possible, ideally from the partial wakeup state itself.

### 1.1.4 Driver Support for Partial Wakeup

This section describes what support needs to be provided in the driver.

### 1.1.4.1 RIO_Init()

During system initialization, radio driver initialization function RIO_Init() is called. In addition to the other initialization, it should call a MS supplied function called RegisterWakeup() and supply the address of a call back function as parameter. The call back function (called CheckAndProcessRadioWakeup() in this document) is described below.

See section 1.1.8 for sample code for RIO_init() function.
Section 1.1.6.1 describes RegisterWakeup() function that does the following:
I . Calls VirtualAlloc() to allocate needed memory space. This space will be used to store pointers to buffers for radio and other data (e.g. data for filtering functions). This memory is referred to as Radio Control Block.
2. Makes the kernel call to lock the driver code and allocated buffers in memory.
3. Calls HAL IOCTL calls and registers a function in driver space that will be called by HAL during warm boot when the wakeup source is radio (this function, called CheckAndProcessRadioWakeup() in this document, determines if the wakeup should continue or not). HAL maintains a data structure for each device driver to store this function pointer.

### 1.1.4.2 Registered wakeup callback function

The radio driver is expected to supply a function which will be called during the system wakeup sequence from HAL. This function executes in the partial wakeup state and therefore has many limitations and requirements (described later). The main purpose of this function is to achieve power savings for the device. Power saving is achieved in many ways as listed below:
- The function could simply read the data off the radio HW and buffer it in the memory blocks for later processing. It could also implement low level filtering (e.g. group level filtering, if the radio HW is not capable of doing it). In this case the function returns a value indicating that system wakeup is not required (in this scenario this function acts like an interrupt service routine, quickly servicing the radio HW and shutting down the system as soon as possible)
- If the system buffers are full, the function could return a value indicating to the HAL that a system wakeup is required but there is no need to power the display. In this scenario, the system will wakeup and execute message router and other components that process the messages and most likely will shut down the system after processing is complete.
- If the data is high priority (e.g. a personal page), the function should return a value indicating to the HAL that a full system wakeup is required because this message will most likely clause user notification.

### 1.1.5 Data Structures

### 1.1.5.1 Radio control block

The radio control block data structure is maintained by HAL. A pointer to the radio control block is passed to the registered function (called CheckAndProcessRadioWakeup() in this document). The radio control block holds pointers to memory blocks that contain data or code. These memory blocks are allocated using VirtualAlloc() function, are locked down so that they are accessible during partial wakeup state, and are accessed using physical addresses.

The radio control block is an array of RADIO_BLOCK which is defined below:

```
  typedef struct _hradio_block {
           DWORD dwId; // Block ID
           DWORD PAddr; // Physical address of block
           DWORD VAddr; // Virtual address of block
           DWORD dwSize; // Size of block
   } HRADIO_BLOCK, *LPHRADIO_BLOCK;
```

The block can be either a pointer to code or a pointer to data as determined by the dwld field.
The Ids are generated using macros defined in the next section.

### 1.1.5.2 Block ID Macros

The radio control block stores pointers to code or data that needs to be accessed during partial wakeup state. The entries are tagged using an id, which is generated using one of the macros defined below:
HRADIO_MAKE_DRIVER_ID (Parl, Par2)
Generates an id for a driver function or data block. Pvr1 can be either HRADlO_DATA (for defining a data block pointer) or HRADIO_CODE (for defining a function pointer). Par2 is an unsigned 16-bit value.
HRADIO_MAKE_SYSTEM_ID (Par1, Par2, Par3)
Generates an id for a known system function or data block. These ids are used internally by the system and should not be used by the device drivers. Par1 can be either HRADIO_DATA (for defining a data block pointer) or HRADIO_CODE (for defining a function pointer). Par2 and Par3 have the following, meanings:

| Par2 | Par3 | |
|---|---|---|
| 0 | HRADIO_WAKEUP | Pointer to the partial wakeup call back function or data |
| 0 | HRADIO_ANALYZE_MSG | Pointer to the AnalyzeMessage() function or data |
| 0 | HRADIO_FILTER | Pointer to the FilterMessage() function or data |
| Address | Group | Pointer to application filter function or data for the given address/group combination |

### 1.1.6 Function Reference - MS Supplied Functions

### 1.1.6.1 RegisterWakeup()

This function does the following:
- Creates the Radio control block (VirtualAlloc(), lock it, register with the HAL)
- Makes HAL IOCTL call to register the wakeup callback function (which will be called by HAL during partial wakeup sequence)
- Makes HAL IOCTL call to register AnalyzeMessage() function (which deciphers the message header)
- Makes HAL IOCTL call to register FilterMessage() function (which invokes the application level filtering functions)

### Syntax

```
LPHRADIO_BLOCK RegisterWakeup(
                       BYTE Deviceld,
                       BYTE NumBlocks,
                       LPVOID pWakeupFn,
                       DWORD dwWakeupFnSize)
```

### Parameters

- Deviceld: Identifies the device controlled by this driver (this parameter is derived from the parameter passed to the RIO_Init() function)
- NumBlocks: Number of *additional* radio control block entries needed by the driver (driver will need one entry for each buffer or function it intends to use during partial wakeup state). This does not include system required entries, e.g. the partial wakeup callback function etc.
- pWakeupFn: Pointer to the partial wakeup callback function.
- dwWakeupFnSize: Size in bytes of the partial wakeup callback function. If not used, pass a 0 value.

### ReturnValue

Returns pointer to the radio control block if successful, NULL otherwise.

### 1.1.6.2 LocateAndCallAnalyzeMessage()

This function locates and invokes the AnalyzeMessage() function *in partial wakeup state* (driver can call the AnalyzeMessage() function directly in other places).

### Syntax

```
      BOOL LocateAndCallAnalyzeMessage (
                       VOID *pMsg,
                       DWORD dwMsgLen,
                       BOOL *pfDiscard,
                       BYTE *pGroupCode)
```

### Parameters

| | |
|---|---|
| pMsg | Pointer to the message bytes. |
| dwMsgLen | Length of the message. |
| pfDiscard | Receives a BOOL value indicating whether the message should be discarded or kept. |
| pGroupCode | Receives the Group code. |

### Return Value

Returns TRUE if message had a valid WS header, FALSE otherwise. When it returns TRUE, pGroupCode receives the group code and pfDiscard receives a BOOL value indicating whether the message should be kept or not (TRUE=discard).

### 1.1.6.3 LocateAndCallFilterMessage()

This function locates and invokes the application level filtering mechanism .

### Syntax

```
       BOOL LocateAndCallFilterMessage (
                       VOID *pMsg,
                       DWORD dwMsgLen,
                       BYTE Address,
                       BYTE GroupCode)
```

### Parameters

| | |
|---|---|
| pMsg | Pointer to the message bytes. |
| dwMsgLen | Length of the message. |
| Address | Address number this message came on. |
| GroupCode | Group code this message came on. |

### Return Value

Returns TRUE if message should be kept, FALSE it it should be discarded.

### 1.1.6.4 RegisterBlock()

Allocates a memory block, locks it down, and creates an entry in the radio control block for it. Then data from the supplied buffer is copied into this newly allocated memory block.

### Syntax

```
       LPHRADIO_BLOCK RegisterBlock(BYTE Deviceld, DWORD dwBlockld,
                                LPBYTE IpbData,
                                DWORD dwDataLen)
```

### Parameters

| | |
|---|---|
| Deviceld | The block will be added to the radio control block for this device. |
| dwBlockld | Block Id to be assigned (This id must be output of macros defined in 1.1.5.2) |
| IpbData | Pointer to the data that will be copied in a newly allocated, memory block. |
| dwDataLen | Length of the data (this is the size of the newly allocated memory block) |

### ReturnValue

Null is returned if data block can't be created. pointer to the created radio block is returned otherwise.

### Remarks

The dvBIockId also indicates whether the block is a code block (function) or data block (buffer).

### 1.1.6.5 LocateBlock()

This function searches the radio control block for the given block id.

### Syntax

LPHRADIO_BLOCK LocateBlock (BYTE Deviceld. DWORD dwBlockld)

### Parameters

| | |
|---|---|
| Deviceld | The block will be searched in the radio control block for this device. |
| dwBlockld | Block Id to be assigned (This id must be output of macros defined in 1.1.5.2) |

### ReturnValue

Returns pointer to radio block if ID found. else returns NULL

### 1.1.6.6 Busy()

This function increments or decrements the-system busy counter.

### Syntax

WORD Busy(BYTE State)

### Parameters

| | |
|---|---|
| State | If TRUE, increments the busy counter. FALSE decrements busy counter. |

### ReturnValue

Returns current value of system busy counter.

### 1.1.6.7 Video()

This function turns the video on or off.

### Syntax

BOOL Video(BYTE State)

### Parameters

| | |
|---|---|
| State | If TRUE, turns video on. FALSE turns video off. |

### ReturnValue

Returns TRUE if operation completed, FALSE otherwise.

### 1.1.7 Function Reference - IHV Supplied Functions

### 1.1.7.1 CheckAndProcessRadioWakeup()

This function is statically part of the radio driver but is called by the HAL during warm boot. The main purpose of this function is to check if the radio device needs some service and whether this service can be handled within HAL or it requires the whole system to be woken up.

### Syntax

```
     DWORD CheckAndProcessRadioWakeup (
              DWORD MemPtr Pointer to radio control block
              )
```

### Description

This function is called in response to the wakeup interrupt from the radio device (RING_INDICATE interrupt). This function is called by HAL before the kernel is initialized (*partial wakeup state).* Because of this, this function must meet the following criteria:
- The function must be on a page boundary.
- The function will be executed in physical mode
- The function must not call any OS or file system calls.
- The function must not call any other function. (If it needs to call other driver supplied functions, they must be called via a function pointer table initialized during startup. See Error! Reference source not found, and Error! Reference source not found. for details.)

The function should read the data from the radio device and determine if the data needs to be kept or discarded. If the data needs to be kept, it should further determine if it is high priority data (see device driver specifications for discussion of address and group property flags). High priority data needs to be processed immediately and will require a full wakeup. Low priority data may be buffered in memory allocated during startup. If that memory is full, a full wake up is again required to flush that memory. In either case, the data is read off the radio device and appropriate return value is passed to the HAL.

The skeleton of this function is:
- read data off the radio HW
- Call AnalyzeMessage() to get the group code information from the message header
- Do group level filtering (if the HW has not done it)
- Invoke application level filtering mechanism. Do message filtering based on the return code.
- if message is to be kept, then buffer it and return appropriate return code

Since this function is executed during the partial wakeup state, it can not make function calls directly. Instead a support library has the following two functions to invoke the AnalyzeMessage() and filter mechanism:
LocateAndcallAnalyzemessage() - this function invokes the AnalyzeMessage() function described in the device driver specifications.
LocateAndCallFilterMessage()-this function invokes application level filtering (to be documented).

### Return Values:

### HRADIO_NOCONTINUE

The device has been serviced, no need to continue the warm boot. An example of this case would be when the radio device has a new message that can be buffered in the system memory (done by this function) and no further processing is required.

### HRADIO_CONTINUE_VIDEO_ON

The device service needs the system to continue the warm boot with video (the video should be powered on too). An example of this case would be when a message is received on a priority address that will cause a notification to be issued.

### HRADIO_CONTINUE_VIDEO_OFF

The device service needs the system to continue the warm boot without video (the video should not be powered on). An example of this case would be when a broadcast message is received when the system memory buffer is full, so processing should continue without video so the system buffer can be flushed.

### Remarks:

The partial call back function is quite similar to the interrupt service function (ISR) (also supplied by the driver). However, there are some significant differences as outlined below:

| **ISR** | **Partial wakeup call back function** |
|---|---|
| Registered using CardRequestIRQ() | Registered using RegisterWakeup() |
| Registered for a specified socket and function | Registered for a driver. |
| Interrupt condition cleared by Card Services. | Call back function needs to clear the interrupt condition. |
| Return as quickly as possible. If more processing needed, spawn a thread and return. | Return as quickly as possible, can not spawn a thread. |
| Kernel and file system services available. | No kernel or file system services. |
| Always called to handle the interrupt from the radio HW. | Called only if the interrupt causes a system wakeup (if the system is already up at the time of the interrupt, only the ISR gets to execute). |
| Responsible to copy the message from the radio HW, to analyze it, and to filter it. Can call the MS supplied functions directly to do these. | Responsible to copy the message from the radio HW, to analyze it, and to filter it. Can call the MS supplied functions using special indirection methods only. |
| Is a normal user-mode function. | Is a special function that executes in physical mode and has special restriction on it (e.g., must be on a page boundary, can not call other functions, etc.) |

### 1.1.8 Sample Code

### 1.1.8.1 RIO_Init()

```
 HINSTANCE HalLib;
 LPHRADIO_BLOCK HalMem;
 
 // Since the Register function needs to be located on
 // a page boundary, the following pragma assures that.
 DWORD CheckAndProcessRadioWakeup(DWORD);
 #pragma alloc_text(".wakeup", CheckAndProcessRadioWakeup)
 
...
 
 HalLib = LoadDriver(TEXT("riohal.dll"));
 if (HalLib) {
    func = GetProcAddress(pRadioCtl->HalLib,
                         TEXT("RegisterWakeup"));
    if (func) {
                // Call RegisterWakeup()
                HalMem = (LPHRADIO_BLOCK)
                         (*func) ((DWORD)CheckAndProcessRadioWakeup) ;
      }
 }
```

### 1.1.8.2 CheckAndProcessRadioWakeup()

```
 LPBYTE pAddressTag, pGroupTag;
 BOOL fDiscard, fGroupFound;
 BYTE GroupCode;
 char *p, buf[1000];
 BYTE bMsgBuf[KAX_MSG_SIZE];
 WORD dwMsgSize;
 char address = 1;
 
 // Fill szMsgBuf[] with message data from the Radio HW
         .............
 // do group filterning
 fGroupFound = LocateAndCallAnalyzeMessage(bMsgBuf, dwMsgSize,
                                         &fDiscard, &GroupCode);
 if (fGroupfound) {
        if (fDiscard) {
                // discard message
                return HRADIO_NOCONTINUE;
        }
        // Search driver data structure for group info relating to
        // the address this message came on and the group code
        // (returned by the AnalyzeMessage() above
        // if GroupCode is not found or it is disabled then
        // also discard the message
        if (!LocateAndCallFilterMessage(bMsgBuf, dwMsgSize,
                                 Address, GroupCode))
        {
                // discard message
                return HRADIO_NOCOMTINUE;
        }
        // here buffer the message and return HRADIO_NOCONTINUER
        // if buffer full then return HRADIO_CONTINUE_VIDEO_OFF
 } else { .
        // treat as a normal page message (cause full wakeup, etc.)
        ...
        return HRADIO_CONTINUE_VIDEO_OFF:
 }
```

### 1.1.9 Type Definitions

This section defines the types used in the driver API.

### 1.1.9.1 Basic Types

The following basic types are used:

| | |
|---|---|
| BYTE | Unsigned 8-bit |
| WORD | Signed 16-bit |
| DWORD | Signed 32-bit |

### 1.1.9.2 Complex Types (structs)

All structures have the following three fields at the beginning:

| | |
|---|---|
| WORD wOperationCode | Indicates what operations needs to be performed. This field also determines the rest of the struct. |
| WORD wStructSize | Each struct has fixed size fields followed by the length of the variable fields. The variable fields follow in the same order as their lengths. The wStructSize field holds the size in bytes of the fixed part of the struct (i.e., fixed fields and the lengths of the variable fields). This field provides a versioning method as well and will be used for backward compatibility in the future releases. |

In addition, the variable length fields are grouped towards the end a length field for each one of them is provided. This allows expanding these structures without losing backward or forward compatibility.

### 1.1.9.3 struct HRADIO_REGISTER

This struct is used for registering a wakeup function.

| **Size** | **Field** |
|---|---|
| 2 | WOperationCode |
| 2 | WStructSize |
| 4 | DwMemPtr |
| I | Device |

| | |
|---|---|
| WORD wOperationCode | HAL_IOCTL_CMD_REGISTER_WAKEUP_FUNCTION |
| WORD wStructSize | sizeof(HRADIO_REGISTER) |
| DWORD dwMemPtr | Pointer to a memory block (RMB). The second DWORD of this memory block contains a pointer to the function that will be called by HAL during wakeup to determine if power on sequence should continue or not. |
| BYTE Device | Device number (This is how HAL distinguishes one device's RMB from another). |

### 1.1.9.4 struct HRADIO_FLAG

This struct use used for operations on the HAL flags.

| **Size** | **Field** |
|---|---|
| 2 | wOperationCode |
| 2 | wStructSize |
| 2 | wFlag |

| | | |
|---|---|---|
| WORD wOperationCode | One for the following values: | |
| | | HRADIO_CMD_FLAG_SET |
| | | HRADIO_CMD_FLAG_CLEAR |
| | | HRADIO_CMD_FLAG_GET |
| WORD wStructSize | sizeof(HRADIO_FLAG) | |
| WORD wFlag | A code indicating which HAL flags is affected by the requested operation. Values are: | |
| | | HRADIO_FLAG_VIDEO_STATE |
| | | HRADIO_FLAG_SYSTEM_BUSY. |

### 1.1.9.5 struct HRADIO_LOCK

This struct use used for operations on locking and unlocking memory.

| **Size** | **Field** |
|---|---|
| 2 | wOperationCode |
| 2 | wStructSize |
| 4 | dwMemPtr |
| 4 | dwSize |

| | | |
|---|---|---|
| WORD wOperationCode | One for the following values: | |
| | | HRADIO_CMD_LOCKPAGE |
| | | HRADIO_CMD_UNLOCKPAGE |
| WORD wStructSize | sizeof(HRADIO_LOCK) | |
| DWORD dwMemPtr | A virtual pointer to memory to be locked or unlocked. | |
| DWORD dwSize | The total number of bytes to be locked or unlocked. | |

### 1.1.10 HAL Flags

The following flags form part of the HAL:

| Flag | Type | Meaning |
|---|---|---|
| HAL_fVideoState | Bool | Set if the video is currently powered on, reset otherwise. Set on cold boot. (When the flag is set using HRADIO_CMD_FLAG_SET command, the video is turned ON. When it is reset, the video is turned off). |
| HAL_SystemBusy | Counter | This needs to be implemented as a counter (at least one byte). If non-zero, HAL will trap power off button to prevent system from shutting down. HRADIO_CMD_FLAG_SET command increments the counter, HRADIO_FLAG_CLEAR_decrements it. Initialized to 0 on cold boot. |

### 1.1.11 HAL IOCTL calls

In Windows CE systems, HAL supports 10 Control calls to perform operations that are specific to their hardware. Most OEMs already implement the following IOCTL call for other services.

### Syntax

```
        BOOL OEMIOControl(
                 DWORD dwCode
                PBYTE pBufIn
                DWORD dwLenIn
                PBYTE pBufOut
                DWORD dwLenOut
                PDWORD pdwActualOut
                );
```

### Parameters

| | |
|---|---|
| dwCode | Specifies a value indicating the I/O control operation to perform. The code used will be IOCTL_HAL_RADIO_CNTRL. |
| pBufln | Points to the buffer containing data that is input to the HAL. |
| dwLenln | Specifies the number of bytes of data in the buffer specified for *pBufln.* |
| pBufOut | Points to the buffer used to transfer the output data. |
| dwLenOut | Specifies the maximum number of bytes in the buffer specified by *pBufOut* |
| pdwActualOut | Points to DWORD buffer the function uses to return the actual number of bytes received from the device. |

### Return Value

Returns TRUE if the HAL successfully completed its specified I/O control operation, otherwise it returns FALSE.

### 1.1.11.1 HRADIO_CMD_REGISTER

### Syntax

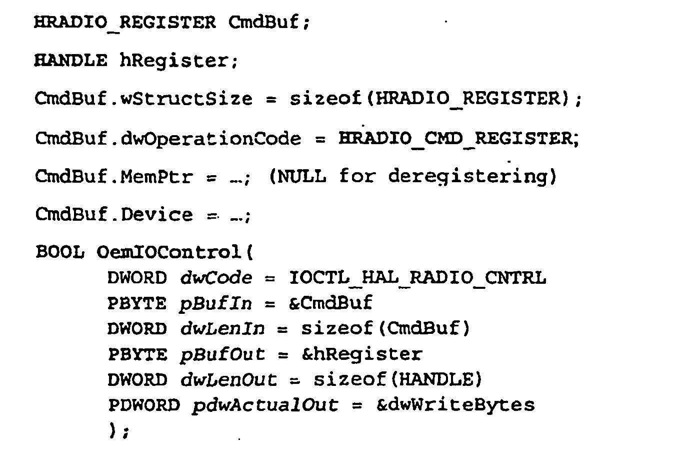

### Operation

This call registers a radio memory block (RMB) that contains a pointer to the wakeup function that is called during HAL power on processing. If the MemPtr member is NULL then the call does de-registration.

The output buffer returns a handle to the RMB (address of the HAL data structure where the device memory block was saved).

### Remarks

The function supplied must be statically bound to the driver code and small enough to fit within a memory page.

### 1.1.11.2 HRADIO_CMD_FLAG_xxx

### Syntax

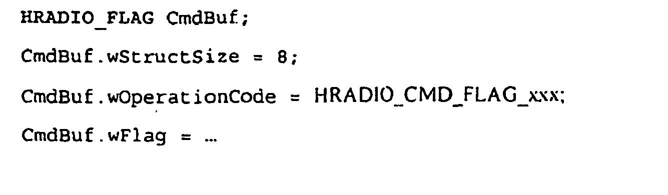

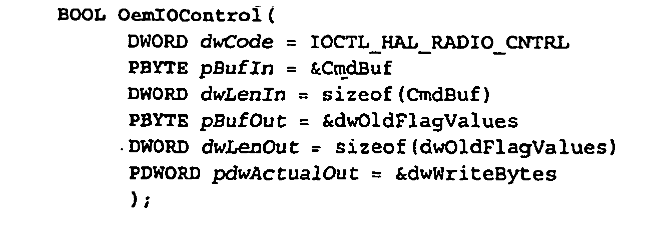

Note: pBufOut, dwLenOut, and pdwActualOut are used for GET operation only. Set them to NULL for other operations.

### Operation

The operation depends upon the operation code stored in dwOperationCode member and is described below:
HAL_IOCTL_CMD_SET_FLAG
   If the indicated flag is a Boolean flag then set it to TRUE. If it is a counter flag, then increment it.
HAL_IOCTL_CMD_RESET_FLAG
   If the indicated flag is a Boolean flag then set it to FALSE. If it is a counter flag and is non-zero, then decrement it.
HAL_IOCTL_CMD_GET_FLAG
   Value of the indicated flag is returned in pBufOut. For simplicity, the flag value is always returned as a DWORD (so pBufOut must be large enough to hold at least one DWORD).
*Additional processing for HRADIO_FLAG_ VIDEO_ STATE:*
   If the flag changes its state because of a set or a reset command, the video needs to be turned on or off to correctly reflect the new state of this flag. For example, if the HAL_fVideoState is 0 and a HAL_IOCTL_CMD_FLAG_SET is issued on this flag, then the video needs to be turned on. If the flag was already set to I (hence the video is already on), then this set command will have no effect and there is no need for any additional processing (the video is already ON).

### Remarks

The HAL flags are accessible to the drivers directly (they don't need to make these IOCTL calls).

### 1.1.11.3 HRADIO_CMD_LOCKPAGE

### Syntax

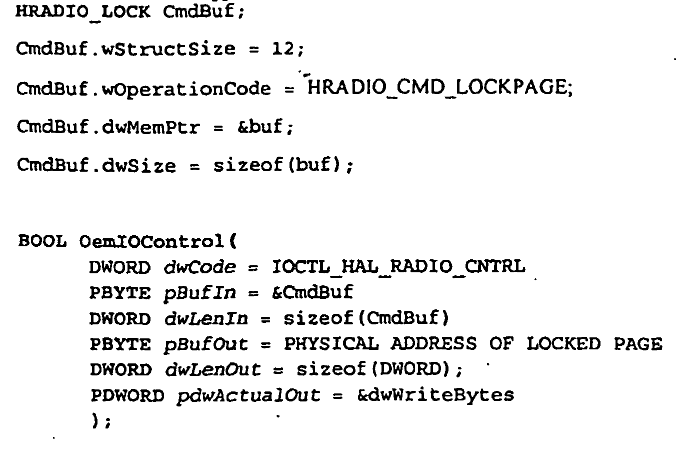

### Operation

This operation locks down the memory pointed to my dwMemPtr. The number of pages locked will be determined by the page size and the value of dwSize. The value returned will be the physical address of the first byte pointed to dwMemPtr. This value will normally be adjusted to be not cached and accessible at initial power on.

### 1.1.11.4 HRADIO_CMD_UNLOCKPAGE

### Syntax

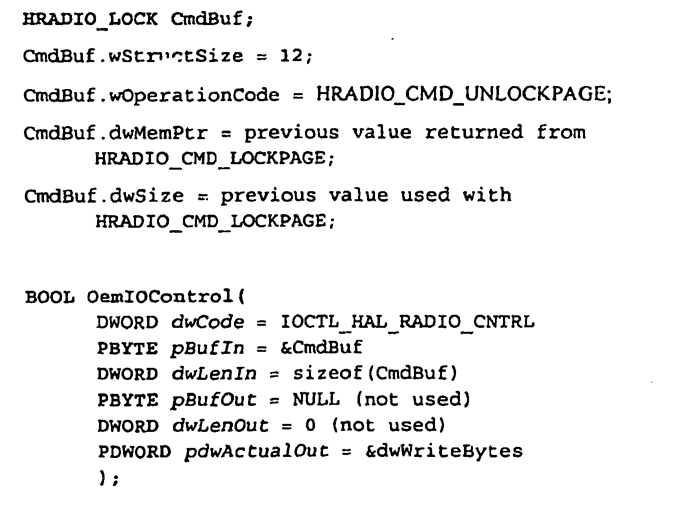

### Operation

This operation unlocks the memory pointed to my dwMemPtr. The number of pages unlocked will be determined by the page size and the value of dwSize. This function is used to unlock previously locked memory.

### 1.1.12 HAL LCD Changes

The LCD initialization code needs to check the wakeup source and determine if the LCD should be turned on or not. If HAL_fVideoRequest flag is implemented, then the processing would be as follows:

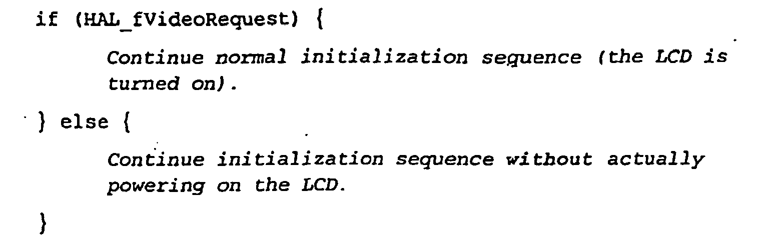

The LCD code also needs to correctly set HAL_fVideoState flag: TRUE when the LCD is powered ON, and FALSE when it is not.

### 1.1.13 HAL Touch Screen Considerations

If the touch screen can not be turned of when the video is turned off, then the touch interrupt should be ignored if the video is currently off (ie, HAL_fVideoState = FALSE). For devices that support the touch screen to turn on the device, then the video should be turned on, and the touch interrupt event should be discarded. This can be done by the following code:

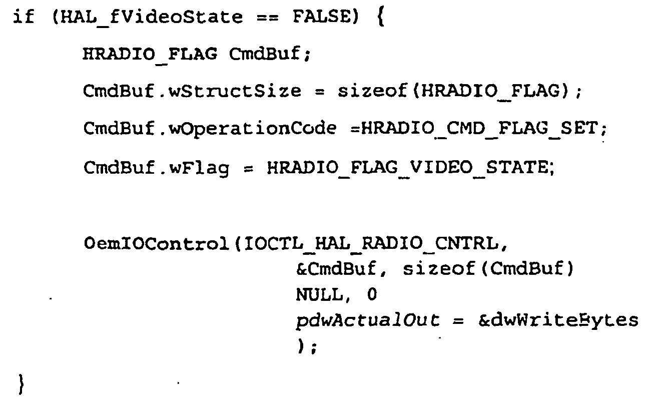

Note that above is just an example code that uses an HAL IOCTL to turn on the video. It is possible that the code to turn on video is trivial (or is available as function) in which case that code can be used directly. No matter how this is done, care must be taken to ensure that HAL_fVidcoState correctly reflects the true state of the video (ON=1 or OFF=0).

### 1.1.14 HAL Keyboard Considerations

1. When the HAL detects a key, it also needs to check HAL_fVideoState and if it is not set (i.e., video is currently not on) then it needs to turn on the video using the HAL IOCTL call (same code as in touch driver) and eats the key.
2. An additional change is required to implement the delayed power off feature. On every power off key press, do the following

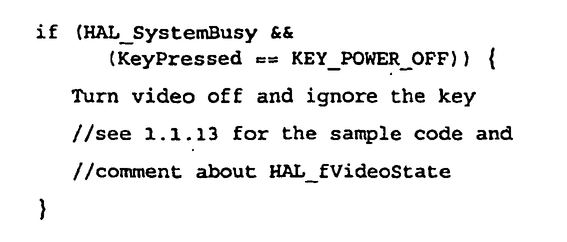

### 1.1.15 OOM system Considerations

The OOM (out of memory message) code needs to check HAL_fVideoState and if it is not set (i.e., video is currently not on) then it needs to turn on the video using the HAL IOCTL call. It also needs to clear the HAL_SystemBusy flag.

### Sample Code:

```
 HRADIO_FLAG CmdBuf;
 CmdBuf.wStructSize = sizoef(HRADIO_FLAG);
 CmdBuf.wOperationCode = HRADIO_CMD_FLAG_SET;
 CmdBuf.wFlag = HRADIO_FLAG_VIDEO_STATE;
 
 OemIOControl(
         IOCTL_HAL_RADIO_CNTRL, // DWORD dwCode
         &CmdBuf, // PBYTE pBufIn
         sizeof(CmdBuf), // DWORD dwLenIn
         NULL, // PBYTE pBufOut
         0, // DWORD dwLenOut
         &dwWriteBytes // PDWORD pdwActualOut
 ) ;
 CmdBuf.wFlag = HRADIO_FLAG_SYSTEM_BUSY;
 DWORD devalue;
 
 while (1) {
       // get the value of SystemBusy counter
       CmdBuf.wOperationCode = HRADIO_CMD_GET;
       if (OemIOControl (
                IOCTL_HAL_RADIO_CNTRL, // DWORD dwCode
                &CmdBuf, // PBYTE pBufIn
                sizeof(CmdBuf), // DWORD dwLenIn
                &dwValue // PBYTE pBufOut
                sizeof(dwValue), // DWORD dwLenOut
                &dwWriteBytes // PDWORD pdwActualOut
        ) {
                if (dwValue == 0) {
                        break; // we are done
                }
 
                // decrement SystemBusy counter
                CmdBuf.dwOperationCode = HRADIO_CMD_CLEAR;
                if (!OemIOControl(
                        IOCTL_HAL_RADIO_CNTRL, // DWORD dwCode
                        &CmdBuf, // PBYTE pBufIn
                        sizeof(CmdBuf), // DWORD dwLenIn
                        NULL, // PBYTE pBufOut
                        0, // DWORD dwLenOut
                        &dwWriteBytes // PDWORD pdwActualOut
                ) {
                        break;
                 }
        }
 }
```

### 1.1.16 OEM_Idle() Considerations

OEM_Idle() is called by the Windows CE kernel when there are no more threads or tasks to execute. This function is expected to do a timeout (typically I - 5 minutes) and if no system activity is detected, the system is shutdown.

To implement the immediate shutdown feature, this function should check HAL_fVideoState flag. If it is clear (Video is off) then it does not need to do the idle timeout and should shutdown the system immediately.

### 1.1.17 Sample Code

### 1.1.17.1 HAL IOCTL Implementation

```
BOOL OEMIoControl(DWORD dwloControlCode, LPVOID lplnBuf, DWORD nlnBufSize,
       LPVOID IpOutBuf, DWORD nOutBufSize, LPDWORD IpBytesReturned) {
  BOOL retval = FALSE;
  DWORD len;
   DWORD PhysAddr, value;
   PHRADIO_LOCK pHalLock;
   LPHRADIO_REGISTER pHalReg;
    LPHRADIO_FLAG pHalFlag;
 
       switch (dwIoControlCode) {
         case IOCTL_HAL_RADIO_CNTRL:
            if (nInBufSize < sizeof(WORD)) {
           SetLastError(ERROR_INVALID_PARAMETER);
           break;
        }
        switch (*(LPWORD)IpInBuf) {
           case HRADIO_CMD_LOCKPAGE:
              if(nInBufSize <sizeof(HRADIO_LOCK)) {
                SetLastError(ERROR_INSUFFICIENT_BUFFER);
                break;
              }
              pHalLock=(LPHRADIO_LOCK)IpInBuf;
              if (LockPages((LPVOID)pHalLocL->dwMemPtr, 1, &PhysAddr, 2)) {
                memcpy(IpOutBuf, &PhysAddr, sizeof(DWORD));
                retval = TRUE;
              }
              break;
 
           case HRADIO_CMD_REGISTER:
              if(nInBufSize < sizeof(HRADIO_REGISTER)) {
                SetLastError(ERROR_INSUFICIENT_BUFFER);
               break;
             }
             pHalReg = (LPHRADIO_REGISTER)IpInBuf;
             if(pHalReg->Device != 1 && pHalReg->Device != 2) {
               SetLastError(ERROR_BAD_DEVICE);
               break;
             }
 
             if (pHalReg->Device = 1) {
               REG32(OEM_BASE+RADIO1) = UnMapPtr(pHalReg->dwMemPtr);
             } else {
                  REG32(OEM_PASE+RADIO2) = UnMapPtr(pHalReg->dwMemPtr);
                 }
 
             if (!pHalReg->dwMemPtr) {
               retval = TRUE;
               break;
             }
 
             if (nOutBufSize < sizeof(DWORD)) {
               SetLastError(ERROR_INSUFFICIENT_BUFFER);
               break;
             }
 
             PhysAddr = pHalReg->Device == 1 ? (OEM_BASE+RADIO1) :
 (OEM_BASE+RADIO2);
             memcpy(IpOutBuf, &PhysAddr. sizeof(DWORD));
             retval = TRUE;
             break;
 
          case HRADIO_CMD_FLAG_SET:
             if(nInBufSize < sizeof(HRADIO_FLAG)) {
               SetLastError(ERROR_INSUFFICIENT_BUFFER);
               break;
             }
             pHalflag = (LPHRADIO_FLAG)IpInBuf;
           switch (pHalFlag->wFlag) {
              case HRADIO_FLAG_ VIDEO_STATE:
                 VideoOff();
                 break;
 
              case HRADIO_FLAG_SYSTEM_BUSY.
                 // need to increment because multiple devices
                 ++REG32(OEM_BASE+RADIO_BUSY);
                 break;
            }
            retval = TRUE;
            break;
 
         case HRADIO_CMD_FLAG_CLEAR:
            if (nInBufSize < sizeof(HRADIO_FLAG)) {
              SetLastError(ERROR_INSUFFICIENT_BUFFER);
              break;
            }
            pHalFlag = (LPHRADIO_FLAG)IpInBuf;
            switch (pHalFlag->wFlag) {
              case HRADIO_FLAG_VIDEO_STATE:
                 VideoOn();
                 break;
 
              case HRADIO_FLAG_SYSTEM_BUSY:
                 // need to increment because multiple devices
                  if (REG32(OEM_BASE+RADIO_BUSY)) {
                    --REG32(OEM_BASE+RADIO_BUSY);
                  }
                  break;
            }
            retval = TRUE;
            break;
 
         case HRADIO_CMD_FLAG_GET:
            if (nInBufSize <sizeof(HRADIO_FLAG)) {
               SetLastError(ERROR_INSUFFICIENT_BUFFER);
               break;
             }
             if(nOutBufSize < sizeof(DWORD)) {
               SetLastError(ERROR_INSUFFiCIENT_BUFFER);
               break;
             }
             pHalFlag = (LPHRADIO_FLAG)IpInBuf;
             value = 0;
             switch (pHalFlag->wFlag) {
               case HRADIO_FLAG_VIDEO_STATE:
                  value = (DWORD)REG8(OEM_BASE+VIDEO-OFF);
                   break;
 
               case HRADIO_FLAG_SYSTEM_BUSY:
                   value = REG32(OEM_BASE+RADIO_BUSY);
                   break;
             }
             memcpy(IpOutBuf, &value, sizeof(DWORD));
             retval = TRUE;
             break;
        }
        break;
      default:
               SetLastError(ERROR_NOT_SUPPORTED);
               break;
      }
      return retval;
 }
```

### 1.1.17.2 HAL PowerOn Implementation

```
 OEMPowerOn()
 
       if (WakeupSource()==CompactFlash_RI) {
               rct = HRADIO_CONTINUE_VIDEO_ON;
                if(RadioWakeupFunction != NULL) {
                  ret = RadioWakeupFunction(HalControlBlock);
                }
                if (ret = HRADIO_CONTINUE_VIDEO_ON) {
                         Videolnit(FALSE);
                } else
                if (ret == HRADIO_CONTINUE_VIDEO_OFF) {
                         VidoeInit(TRUE);
                } else
                GotToSleep();
```

### 1.1.17.3 HAL Changes for LCD

```
 VideoInit(BOOL KeepVideoOff);
 VideoOn();
 VideoOff();
```

### 1.1.17.4 HAL Considerations for Keyboard

```
 /* system already running *_/
 if ((DWORD)REG8(OEM-BASE+VIDEO_OFF)) {
        if (IsWakeupKey(key)) {
                 Video(on);
        }
        IgnoreKey();
 }
 if (IsPowerDownKey(key)) {
        if (REG32(OEM_BASE+RADIO _BUSY)) {
                 VideoOff();
                 IgnoreKey();
         } else ProcessKey();
 }
```

### 1.1.17.5 HAL Considerations for Touch Screen

Same logic as keyboard Changes described above.

### 1.1.17.6 HAL Considerations for OEM_Idle()

```
 if VideoOff ()
       GoToSleep();
```

## Claims

1. One or more computer-readable media having computer-executable instructions embodied thereon that, when executed, perform a method for managing wireless information received at a portable computing device (10) having a first processor (62) and a second processor (20), the method comprising:
analyzing a data message at the first processor (62), the data message received by the portable computing device;
**characterised in that** the method further comprises:
determining whether the data message includes information to be immediately processed; and
immediately communicating an interrupt request to the second processor (20) if the data message includes information to be processed immediately, the interrupt request utilized to initiate a wake up of the second processor of the portable computing device (10).

2. The one or more computer-readable media of claim 1 further comprising generating the interrupt request.

3. The one or more computer-readable media of claim 1, wherein a wireless address associated with the data message is utilized to determine whether the data message includes information to be processed immediately.

4. The one or more computer-readable media of claim 1 further comprising storing the data message in memory (64).

5. The one or more computer-readable media of claim 4, wherein the data message is stored in memory (64) for at least the amount of time corresponding to a wake-up period associated with the second processor (20).

6. A computer implemented method for handling wireless information received at a portable computing device (10), the method comprising:
receiving an interrupt request, the interrupt request providing an indication to wake up a processor (20) of the portable computing device;
**characterised in that** the method further comprises:
obtaining at least a portion of information stored in a memory (64) component;
identifying that the at least the portion of information comprises high priority information to be immediately processed;
in response to identifying the high priority information, determining one or more components necessary to process the high priority information; and
immediately activating the one or more components to process the high priority information.

7. The computerized method of claim 6 further comprising loading a kernel.

8. The computerized method of claim 7 further comprising loading one or more device drivers.

9. The computerized method of claim 6 further comprising recognizing whether a user interaction is required.

10. The computerized method of claim 9, wherein the portable computing device (10) completely wakes up with activation of a display (34) if the user interaction is required.

11. The computerized method of claim 10 further comprising providing an indication that high priority information has been received.

12. The computerized method of claim 6, wherein the portable computing device (10) is powered-up without the display (34) to process the high priority information.

13. The computerized method of claim 6 further comprising determining whether content of the high priority information is relevant to the portable computing device (10), wherein the high priority information is discarded if the content of the high priority information is irrelevant to the portable computing device (10).

14. A portable computing device (10) for receiving wireless information messages comprising a first processor (62), a second processor (20) and memory (64)
**characterised in that**:
at least a portion of the wireless information messages comprise a high priority message indicating that immediate processing is preferred,
the first processor (62) is arranged to identify whether a wireless information message includes information that indicates a preference for immediate processing and, if immediate processing is preferred, immediately communicating an interrupt request;
the second processor (20) is arranged to receive the interrupt request, to obtain the wireless information message, and to recognize whether the wireless information message includes content that indicates a preference of immediate processing and, if immediate processing is preferred, immediately processing the high priority information; and
the memory (64) is arranged to store the wireless information message until the second processor (20) obtains the wireless information message.

15. The portable computing device (10) of claim 14 further comprising a wireless receiver (60) capable of receiving the wireless information message.

16. The portable computing device (10) of claim 14, wherein the first processor (62) generates the interrupt request.

17. The portable computing device (10) of claim 14, wherein a wireless address associated with the wireless information message is utilized to determine whether the wireless information message includes information that indicates the preference of immediate processing.

18. The portable computing device (10) of claim 14, wherein the second processor (20) is configured to determine whether content of the wireless information message is relevant to the portable computing device (10), wherein the wireless information message is discarded if the content of the wireless information message is irrelevant to the portable computing device (10).

19. The portable computing device (10) of claim 14, wherein the second processor (20) loads a kernel and one or more device drivers.

20. The portable computing device (10) of claim 14, wherein the second processor (20) Identifies whether a user interaction is required and, if so, activates a display (34) of the portable computing device (10).

## Patentansprüche

1. Ein oder mehrere computerlesbare Medien mit darauf verkörperten computerausführbaren Befehlen, die, wenn sie ausgeführt werden, ein Verfahren zum Verwalten von drahtlosen Informationen durchführen, die an einer tragbaren Rechenvorrichtung (10) mit einem ersten Prozessor (62) und einem zweiten Prozessor (20) empfangen werden, wobei das Verfahren folgende Schritte umfasst:
Analysieren einer Datennachricht am ersten Prozessor (62), wobei die Datennachricht von der tragbaren Rechenvorrichtung empfangen wird;
**dadurch gekennzeichnet, dass** das Verfahren ferner folgende Schritte umfasst:
Bestimmen, ob die Datennachricht Informationen aufweist, die unverzüglich verarbeitet werden sollen; und
unverzügliches Kommunizieren einer Interrupt-Anfrage an den zweiten Prozessor (20), wenn die Datennachricht Informationen aufweist, die unverzüglich verarbeitet werden sollen, wobei die Interrupt-Anfrage verwendet wird, um ein Aufwecken des zweiten Prozessors der tragbaren Rechenvorrichtung (10) zu initiieren.

2. Ein oder mehrere computerlesbare Medien nach Anspruch 1, die ferner ein Erzeugen der Interrupt-Anfrage umfassen.

3. Ein oder mehrere computerlesbare Medien nach Anspruch 1, wobei eine drahtlose Adresse, die der Datennachricht zugeordnet ist, verwendet wird, um zu bestimmen, ob die Datennachricht Informationen aufweist, die unverzüglich verarbeitet werden sollen.

4. Ein oder mehrere computerlesbare Medien nach Anspruch 1, die ferner ein Speichern der Datennachricht in einem Speicher (64) umfassen.

5. Ein oder mehrere computerlesbare Medien nach Anspruch 4, wobei die Datennachricht im Speicher (64) mindestens eine Zeitspanne lang gespeichert wird, die einer Aufweckdauer entspricht, die dem zweiten Prozessor (20) zugeordnet ist.

6. Computerimplementiertes Verfahren zur Handhabung von drahtlosen Informationen, die an einer tragbaren Rechenvorrichtung (10) empfangen werden, wobei das Verfahren folgende Schritte umfasst:
Empfangen einer Interrupt-Anfrage, wobei die Interrupt-Anfrage eine Angabe bereitstellt, um einen Prozessor (20) der tragbaren Rechenvorrichtung aufzuwecken;
**dadurch gekennzeichnet, dass** das Verfahren ferner folgende Schritte umfasst:
Erhalten mindestens eines Abschnitts von Informationen, die in einer Komponente eines Speichers (64) gespeichert sind;
Identifizieren, dass der mindestens eine Abschnitt von Informationen Informationen mit hoher Priorität umfasst, die unverzüglich verarbeitet werden sollen;
als Reaktion auf das Identifizieren der Informationen mit hoher Priorität, Bestimmen einer oder mehrerer Komponenten, die zum Verarbeiten der Informationen mit hoher Priorität notwendig sind; und
unverzügliches Aktivieren der einen oder mehreren Komponenten, um die Informationen mit hoher Priorität zu verarbeiten.

7. Computergestütztes Verfahren nach Anspruch 6, das ferner ein Laden eines Kernels umfasst.

8. Computergestütztes Verfahren nach Anspruch 7, das ferner ein Laden eines oder mehrerer Vorrichtungstreiber umfasst.

9. Computergestütztes Verfahren nach Anspruch 6, das ferner ein Erkennen umfasst, ob eine Benutzerinteraktion benötigt wird.

10. Computergestütztes Verfahren nach Anspruch 9, wobei die tragbare Rechenvorrichtung (10) durch eine Aktivierung einer Anzeige (34) vollständig aufwacht, wenn die Benutzerinteraktion benötigt wird.

11. Computergestütztes Verfahren nach Anspruch 10, das ferner ein Bereitstellen einer Angabe umfasst, dass Informationen mit hoher Priorität empfangen wurden.

12. Computergestütztes Verfahren nach Anspruch 6, wobei die tragbare Rechenvorrichtung (10) ohne die Anzeige (34) hochgefahren wird, um die Informationen mit hoher Priorität zu verarbeiten.

13. Computergestütztes Verfahren nach Anspruch 6, das ferner ein Bestimmen umfasst, ob ein Inhalt der Informationen mit hoher Priorität für die tragbare Rechenvorrichtung (10) relevant ist, wobei die Informationen mit hoher Priorität verworfen werden, wenn der Inhalt der Informationen mit hoher Priorität für die tragbare Rechenvorrichtung (10) irrelevant ist.

14. Tragbare Rechenvorrichtung (10) zum Empfangen von drahtlosen Informationsnachrichten, die einen ersten Prozessor (62), einen zweiten Prozessor (20) und einen Speicher (64) umfasst,
**dadurch gekennzeichnet, dass**:
mindestens ein Abschnitt der drahtlosen Informationsnachrichten eine Nachricht mit hoher Priorität umfasst, die angibt, dass ein unverzügliches Verarbeiten bevorzugt ist, der erste Prozessor (62) eingerichtet ist, zu identifizieren, ob eine drahtlose Informationsnachricht Informationen aufweist, die eine Präferenz für unverzügliches Verarbeiten angeben, und, wenn unverzügliches Verarbeiten bevorzugt ist, eine Interrupt-Anfrage unverzüglich kommuniziert;
der zweite Prozessor (20) eingerichtet ist, die Interrupt-Anfrage zu empfangen, die drahtlose Informationsnachricht zu erhalten und zu erkennen, ob die drahtlose Informationsnachricht einen Inhalt aufweist, der eine Präferenz zum unverzüglichen Verarbeiten angibt, und, wenn unverzügliches Verarbeiten bevorzugt ist, die Informationen mit hoher Priorität unverzüglich verarbeitet; und
der Speicher (64) eingerichtet ist, die drahtlose Informationsnachricht zu speichern, bis der zweite Prozessor (20) die drahtlose Informationsnachricht erhält.

15. Tragbare Rechenvorrichtung (10) nach Anspruch 14, die ferner einen drahtlosen Empfänger (60) umfasst, der in der Lage ist, die drahtlose Informationsnachricht zu empfangen.

16. Tragbare Rechenvorrichtung (10) nach Anspruch 14, wobei der erste Prozessor (62) die Interrupt-Anfrage erzeugt.

17. Tragbare Rechenvorrichtung (10) nach Anspruch 14, wobei eine drahtlose Adresse, die der drahtlosen Informationsnachricht zugeordnet ist, verwendet wird, um zu bestimmen, ob die drahtlose Informationsnachricht Informationen aufweist, die die Präferenz zum unverzüglichen Verarbeiten angeben.

18. Tragbare Rechenvorrichtung (10) nach Anspruch 14, wobei der zweite Prozessor (20) eingerichtet ist, zu bestimmen, ob ein Inhalt der drahtlosen Informationsnachricht für die tragbare Rechenvorrichtung (10) relevant ist, wobei die drahtlose Informationsnachricht verworfen wird, wenn der Inhalt der drahtlosen Informationsnachricht für die tragbare Rechenvorrichtung (10) irrelevant ist.

19. Tragbare Rechenvorrichtung (10) nach Anspruch 14, wobei der zweite Prozessor (20) einen Kernel und einen oder mehrere Vorrichtungstreiber lädt.

20. Tragbare Rechenvorrichtung (10) nach Anspruch 14, wobei der zweite Prozessor (20) identifiziert, ob eine Benutzerinteraktion benötigt wird, und falls dem so ist, eine Anzeige (34) der tragbaren Rechenvorrichtung (10) aktiviert.

## Revendications

1. Un ou plusieurs supports lisibles par ordinateur présentant des instructions informatiques exécutables intégrées dans ledit ou lesdits supports, lesquelles, lorsqu'elles sont exécutées, mettent en oeuvre un procédé destiné à gérer des informations sans fil reçues au niveau d'un dispositif informatique portable (10) présentant un premier processeur (62) et un second processeur (20), le procédé comprenant les étapes ci-dessous consistant à :
analyser un message de données au niveau du premier processeur (62), le message de données étant reçu par le dispositif informatique portable ;
**caractérisés en ce que** le procédé comprend en outre les étapes ci-dessous consistant à :
déterminer si le message de données comprend des informations à traiter immédiatement ; et
communiquer immédiatement une demande d'interruption au second processeur (20), si le message de données comprend des informations à traiter immédiatement, la demande d'interruption étant utilisée pour initier un réveil du second processeur du dispositif informatique portable (10).

2. Un ou plusieurs supports lisibles par ordinateur selon la revendication 1, comprenant en outre l'étape consistant à générer la demande d'interruption.

3. Un ou plusieurs supports lisibles par ordinateur selon la revendication 1, dans lequel ou lesquels une adresse sans fil associée au message de données est utilisée pour déterminer si le message de données comprend des informations à traiter immédiatement.

4. Un ou plusieurs supports lisibles par ordinateur selon la revendication 1, comprenant en outre l'étape consistant à stocker le message de données dans une mémoire (64).

5. Un ou plusieurs supports lisibles par ordinateur selon la revendication 4, dans lequel ou lesquels le message de données est stocké dans une mémoire (64) pendant au moins le laps de temps correspondant à une période de réveil associée au second processeur (20).

6. Procédé mis en oeuvre dans un ordinateur, destiné à gérer des informations sans fil reçues au niveau d'un dispositif informatique portable (10), le procédé comprenant les étapes ci-dessous consistant à :
recevoir une demande d'interruption, la demande d'interruption fournissant une indication en vue du réveil d'un processeur (20) du dispositif informatique portable ;
**caractérisé en ce que** le procédé comprend en outre les étapes ci-dessous consistant à :
obtenir au moins une partie d'informations stockée dans un élément de mémoire (64) ;
identifier qu'au moins la partie d'informations comprend des informations à priorité élevée destinées à être traitées immédiatement ;
en réponse à l'identification des informations à priorité élevée, déterminer un ou plusieurs éléments nécessaires au traitement des informations à priorité élevée ; et
activer immédiatement ledit un ou lesdits plusieurs éléments en vue de traiter les informations à priorité élevée.

7. Procédé informatisé selon la revendication 6, comprenant en outre l'étape consistant à charger un noyau.

8. Procédé informatisé selon la revendication 7, comprenant en outre l'étape consistant à charger un ou plusieurs pilotes de dispositif.

9. Procédé informatisé selon la revendication 6, comprenant en outre l'étape consistant à détecter si une interaction d'utilisateur est nécessaire.

10. Procédé informatisé selon la revendication 9, dans lequel le dispositif informatique portable (10) se réveille complètement avec l'activation d'un écran d'affichage (34) lorsque l'interaction d'utilisateur est nécessaire.

11. Procédé informatisé selon la revendication 10, comprenant en outre l'étape consistant à fournir une indication selon laquelle des informations à priorité élevée ont été reçues.

12. Procédé informatisé selon la revendication 6, dans lequel le dispositif informatique portable (10) est mis sous tension sans l'écran d'affichage (34), en vue de traiter les informations à priorité élevée.

13. Procédé informatisé selon la revendication 6, comprenant en outre l'étape consistant à déterminer si le contenu des informations à priorité élevée est pertinent pour le dispositif informatique portable (10), dans lequel les informations à priorité élevée sont rejetées lorsque le contenu des informations à priorité élevée n'est pas pertinent pour le dispositif informatique portable (10).

14. Dispositif informatique portable (10) destiné à recevoir des messages d'informations sans fil, comprenant un premier processeur (62), un second processeur (20) et une mémoire (64) ;
**caractérisé en ce que** :
au moins certains des messages d'informations sans fil comprennent un message à priorité élevée indiquant qu'un traitement immédiat est souhaité ;
le premier processeur (62) est agencé de manière à déterminer si un message d'informations sans fil comprend des informations qui indiquent une préférence pour un traitement immédiat et, si un traitement immédiat est souhaité, transmettre immédiatement une demande d'interruption ;
le second processeur (20) est agencé de manière à recevoir la demande d'interruption, à obtenir le message d'informations sans fil, et à détecter si le message d'informations sans fil comprend un contenu qui indique une préférence pour un traitement immédiat et, si un traitement immédiat est souhaité, traiter immédiatement les informations à priorité élevée ; et
la mémoire (64) est agencée de manière à stocker le message d'informations sans fil jusqu'à ce que le second processeur (20) obtienne le message d'informations sans fil.

15. Dispositif informatique portable (10) selon la revendication 14, comprenant en outre un récepteur sans fil (60) apte à recevoir le message d'informations sans fil.

16. Dispositif informatique portable (10) selon la revendication 14, dans lequel le premier processeur (62) génère la demande d'interruption.

17. Dispositif informatique portable (10) selon la revendication 14, dans lequel une adresse sans fil associée au message d'informations sans fil est utilisée en vue de déterminer si le message d'informations sans fil comprend des informations qui indiquent la préférence pour un traitement immédiat.

18. Dispositif informatique portable (10) selon la revendication 14, dans lequel le second processeur (20) est configuré de manière à déterminer si le contenu du message d'informations sans fil est pertinent pour le dispositif informatique portable (10), dans lequel le message d'informations sans fil est rejeté lorsque le contenu du message d'informations sans fil n'est pas pertinent pour le dispositif informatique portable (10).

19. Dispositif informatique portable (10) selon la revendication 14, dans lequel le second processeur (20) charge un noyau et un ou plusieurs pilotes de dispositif.

20. Dispositif informatique portable (10) selon la revendication 14, dans lequel le second processeur (20) détermine si une interaction d'utilisateur est nécessaire et, le cas échéant, active un écran d'affichage (34) du dispositif informatique portable (10).
